(19) Europäisches Patentamt
European Patent Office
Office européen des brevets

(11) **EP 4 178 525 B1**

(12) **EUROPEAN PATENT SPECIFICATION**

(45) Date of publication and mention of the grant of the patent:
**06.05.2026 Bulletin 2026/19**

(21) Application number: **21837482.5**

(22) Date of filing: **31.03.2021**

(51) International Patent Classification (IPC):
***D04H 1/425*** *(2012.01)* ***D04H 1/4374*** *(2012.01)*
***D04H 1/732*** *(2012.01)* ***D21F 1/02*** *(2006.01)*
***D21F 11/04*** *(2006.01)* ***D21H 27/00*** *(2006.01)*
***D21H 27/30*** *(2006.01)* ***B32B 5/26*** *(2006.01)*
***A47K 10/16*** *(2006.01)*

(52) Cooperative Patent Classification (CPC):
**D04H 1/732; D04H 1/425; D04H 1/435; D04H 1/4374; D04H 1/43828; D04H 1/43918; D21F 1/02; D21F 11/04; D21H 27/002; D21H 27/30**

(86) International application number:
**PCT/US2021/025159**

(87) International publication number:
**WO 2022/010551 (13.01.2022 Gazette 2022/02)**

(54) **ABSORBENT PRODUCT WITH IMPROVED CAPILLARY PRESSURE AND SATURATION CAPACITY**

ABSORBIERENDES PRODUKT MIT VERBESSERTEM KAPILLARDRUCK UND SÄTTIGUNGSVERMÖGEN

PRODUIT ABSORBANT À PRESSION CAPILLAIRE ET CAPACITÉ DE SATURATION AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2020 US 202063050319 P**

(43) Date of publication of application:
**17.05.2023 Bulletin 2023/20**

(73) Proprietor: **Kimberly-Clark Worldwide, Inc.**
**Neenah, Wisconsin 54956 (US)**

(72) Inventors:
- **COLMAN, Charles W.**
  **Neenah, Wisconsin 54956 (US)**
- **BAKER, Joseph K.**
  **Neenah, Wisconsin 54956 (US)**
- **BAKER, Andrew T.**
  **Neenah, Wisconsin 54956 (US)**
- **RANGANATHAN, Sridhar**
  **Neenah, Wisconsin 54956 (US)**
- **CAVANAUGH, Thomas**
  **Neenah, Wisconsin 54956 (US)**

(74) Representative: **Dehns**
**10 Old Bailey**
**London EC4M 7NG (GB)**

(56) References cited:
**EP-A1- 0 496 524**
**US-A1- 2002 195 215**
**US-A1- 2006 005 934**
**US-A1- 2013 009 335**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 178 525 B1

## Description

## BACKGROUND

Conventional absorbent articles, including wiping products have been made from woven and knitted fabrics. Such wipers have been used in all different types of industries, such as for industrial applications, food service applications, health and medical applications, and for general consumer use. Conventional rags and washcloths can be reusable if laundered properly. Disposable wipers, however, continue to gain in popularity and are readily displacing many conventional woven or knitted products. Disposable wipers, for instance, can offer many advantages. For example, disposable wipers are generally more sterile, as they are generally free of debris and contaminants. Laundered rags and washcloths, for instance, can still contain residual debris from past use and can also pick up debris during the laundering process. In addition, laundering woven or knitted wipers can not only create a great expense, but also requires the use of copious amounts of water and detergents that must be properly disposed of. Further, in many applications, especially in the industrial setting, conventional cloth wipers are disposed of after a single use due to the chemicals and other debris that come into contact with the wiper.

However, disposable wipers often suffer from a tradeoff between being able to quickly absorb water or other fluids from a surface and being able to store a large volume of fluid. For instance, a wiper may be formed with a structure and fibers suitable for improved capillary pressure (which improves the force that drives fluid into the wipe for improved pick up speed), but, such a structure and fiber selection sacrifices void volume, which determines the fluid capacity of the wipe. Additionally, conventional wipers also suffer from a decrease in pick-up speed with increased saturation. Thus, as the liquid saturation of the wiper increases, the capillary pressure of the wiper decreases, which in turn decreases the pick-up speed

Furthermore, it was found that a layered wiper approach also failed to produce a wiper with good pick-up speed and good liquid capacity. Particularly, as discussed briefly above, wipers or wiper layers configured for improved pick-up speed often exhibit high capillary pressures at low saturation, while wipers configured for high absorbent capacity exhibit very low capillary pressure, even at low saturation. However, surprisingly, when a wiper was formed with a high pick-up speed layer adjacent to a high absorbent capacity layer, it was found that the interface between the layers exhibited a capillary pressure that was lower than either of the two adjacent layers, which resulted in no improvement in performance, even though two separate layers were combined. Particularly, it is believed that no improvement in either pick-up speed or absorbent capacity was observed as fluid was unable to transfer from the high pick-up layer to the high absorbent capacity layer.

Therefore, it would be a benefit to provide an absorbent article, such as a wiper that has improved absorbent capacity while maintaining good fluid pick-up. Furthermore, it would also be advantageous to provide a method for providing an absorbent article with a crossover zone having a capillary pressure greater than one of the two adjacent layers. It would also be a benefit to provide a wiper with an increased fluid-pick up speed. Furthermore, it would be advantageous to provide a wiper with improved fluid-pick up speed even when the wiper is at least partially saturated.

EP 0496524 A1 discloses a foam-formed nonlaminated stratified paper tissue with two foamed layers containing pulp fibers.

## SUMMARY

The present disclosure is generally directed to a multi-layer fibrous web, as defined in claim 1. The multi-layer fibrous web includes a first layer, a second layer, and a crossover zone at an interface of the first layer and the second layer. The second layer has a capillary pressure that is less than a capillary pressure of the first layer, and the crossover zone has a capillary pressure between the capillary pressure of the first layer and the capillary pressure of the second layer. Both the first layer and the second layer are a foam formed layer.

The present disclosure is also directed to a wiping product comprising the multi-layer fibrous web, as defined in claim 8, and to an absorbent article comprising the multi-layer fibrous web, as defined in claim 9.

The first foam formed layer comprises pulp fibers. The second foam formed layer comprises elastomeric polymer fibers. In one aspect, the crossover zone includes first foam formed layer fibers and second foam formed layer fibers. In another aspect, the wiping product exhibits an absorbent capacity as measured using a Gravimetric Absorbency Testing System (GATS) according to the M/K system GATS test using Analysis Program Version 4.3.4, of about 5.5 grams of fluid per gram of wipe (g/g) or greater. In yet a further aspect, the wiping product exhibits an absorbent rate as measured using a Gravimetric Absorbency Testing System (GATS) according to the M/K system GATS test using Analysis Program Version 4.3.4, of about 1.6 ((g/g)*sec0.5) or greater.

Furthermore, in an aspect, the first foam formed layer has a capillary pressure greater than 33 kilopascals at 0% saturation. Additionally or alternatively, the second foam formed layer has a capillary pressure less than 33 kilopascals at 0% saturation. In another aspect, the crossover zone comprises about 5 wt.% to about 50 wt.% of the wiping product.

Moreover, in an aspect, the second foam formed layer comprises at least about 10% by dry weight of the wiping product.

The present disclosure is also further directed to a method of forming a multi-layer fibrous web. The method includes forming a first foam formed layer and a second foam formed layer, where the second foam formed layer has a capillary pressure that is less than a capillary pressure of the first foam formed layer. Furthermore, the first foam formed layer and the second foam formed layer are formed using a headbox, where the headbox includes at least one lamella that is at least partially retracted from the headbox.

In one aspect, the lamella is retracted to a position sufficient to allow mixing of a portion of first foam formed layer fibers and a portion of second foam formed layer fibers in the headbox, forming the first foam formed layer, the second foam formed layer, and a crossover zone. In another aspect, the first foam formed layer fibers and the second foam formed layer fibers are provided to a single headbox as a suspension of first foam formed layer fibers and a suspension of second foam formed layer fibers. Furthermore, in an aspect, at least one of the first foam formed layer and the second foam formed layer is formed using a ratio of jet speed to forming fabric speed of about 0.5:1 to about 5:1. Additionally or alternatively, in an aspect, the crossover zone comprises first foam formed layer fibers and second foam formed layer fibers, and comprises about 5 wt.% to about 50 wt.% of the wiping product. In yet another aspect, the first foam formed layer has a capillary pressure at 0% saturation of greater than 33 kilopascals, and/or the second foam formed layer has a capillary pressure at 0% saturation of less than 33 kilopascals.

Other features and aspects of the present disclosure are discussed in greater detail below.

## BRIEF DESCRIPTION OF THE DRAWINGS

A full and enabling disclosure of the present disclosure is set forth more particularly in the remainder of the specification, including reference to the accompanying figures, in which:

Fig. 1 illustrates a cross section of an aspect of a wiping product according to the present disclosure;

Fig. 2A illustrates a headbox apparatus according to an aspect of the present disclosure;

FIG. 2B illustrates a headbox apparatus of Fig. 2A, with the divider pushed in;

Fig. 3 shows a graph of basis weights of wiper samples;

Fig. 4 shows a graph of densities of wiper samples;

Fig. 5 shows a graph of absorbent capacities of wiper samples, as measured using a Gravimetric Absorbency Testing System (GATS) according to the M/K system GATS test using Analysis Program Version 4.3.4;

Fig. 6 shows a graph of absorbent rates of wiper samples, as measured using a Gravimetric Absorbency Testing System (GATS) according to M/K system GATS test using Analysis Program Version 4.3.4;

Fig. 7 illustrates an exemplary GATS used in examples of the present disclosure; and

Figs. 8A-8E illustrate models used in an aspect of the present disclosure to determine capillary pressure of one or more layers or a crossover zone according to the present disclosure.

Repeat use of reference characters in the present specification and drawings is intended to represent the same or analogous features or elements of the present invention.

## DEFINITIONS

The terms "about," "approximately," or "generally,", when used herein to modify a value, indicates that the value can be raised or lowered by 10%, such as 7.5%, such as 5%, such as 4%, such as 3%, such as 2%, or such as 1%, and remain within the disclosed aspect.

The term "fiber" as used herein refers to an elongate particulate having an apparent length greatly exceeding its apparent width, i.e. a length to diameter ratio of at least about 10. More specifically, as used herein, fiber refers to papermaking fibers. The present invention contemplates the use of a variety of papermaking fibers, such as, for example, natural fibers or synthetic fibers, or any other suitable fibers, and any combination thereof. Papermaking fibers useful in the present invention include cellulosic fibers commonly and more particularly wood pulp fibers.

The term "slurry" as used herein refers to a mixture comprising fibers and water.

The term "absorbent article" when used herein refers to products made from fibrous webs which includes, but is not limited to, personal care absorbent articles, such as baby wipes, mitt wipes, diapers, pant diapers, open diapers, training pants, absorbent underpants, incontinence articles, feminine hygiene products (e.g., sanitary napkins), swim wear and so forth; medical absorbent articles, such as garments, fenestration materials, underpads, bedpads, bandages, absorbent drapes, and medical wipes; food service wipers; clothing articles; pouches, and so forth. Materials and processes suitable for forming such articles are well known to those skilled in the art. An absorbent article, for example, can include a liner, an outer cover, and an absorbent material or pad formed from a fibrous web positioned therebetween.

The term "wiping product" as used herein refers to products made from fibrous webs and includes paper towels, industrial wipers, foodservice wipers, napkins, medical pads, and other similar products. It should be understood that, in one aspect, a wiping product may be included when referring to an absorbent article or absorbent web according to the present disclosure.

The terms "layered web," "multi-layered web," and "multi-layered sheet," generally refer to sheets of a fibrous product prepared from two or more layers of a furnish which may include different fiber types. The layers may be formed from the deposition of separate streams of dilute fiber slurries, upon one or more screens. If the individual layers are initially formed on separate screens, the layers may be subsequently combined (while wet) to form a layered web.

As used herein, the term "basis weight" generally refers to the dry weight per unit area of a fibrous product and is generally expressed as grams per square meter (gsm). Basis weight is measured using TAPPI test method T-220.

The term "machine direction" as used herein refers to the direction of travel of the forming surface onto which fibers are deposited during formation of a nonwoven web.

The term "cross-machine direction" as used herein refers to the direction which is perpendicular to the machine direction defined above and in the plane of the forming surface.

The term "pulp" as used herein refers to fibers from natural sources such as woody and nonwoody plants. Woody plants include, for example, deciduous and coniferous trees. Non-woody plants include, for example, cotton, flax, esparto grass, milkweed, straw, jute, hemp, and bagasse. Pulp fibers can include hardwood fibers, softwood fibers, and mixtures thereof.

The term "average fiber length" as used herein refers to an average length of fibers, fiber bundles and/or fiber-like materials determined by measurement utilizing microscopic techniques. A sample of at least 20 randomly selected fibers is separated from a liquid suspension of fibers. The fibers are set up on a microscope slide prepared to suspend the fibers in water. A tinting dye is added to the suspended fibers to color cellulose-containing fibers so they may be distinguished or separated from synthetic fibers. The slide is placed under a Fisher Stereomaster II Microscope-S19642/S19643 Series. Measurements of 20 fibers in the sample are made at 20X linear magnification utilizing a 0-20 mils scale and an average length, minimum and maximum length, and a deviation or coefficient of variation are calculated. In some cases, the average fiber length will be calculated as a weighted average length of fibers (e.g., fibers, fiber bundles, fiber-like materials) determined by equipment such as, for example, a Kajaani fiber analyzer Model No. FS-200, available from Kajaani Oy Electronics, Kajaani, Finland. According to a standard test procedure, a sample is treated with a macerating liquid to ensure that no fiber bundles or shives are present. Each sample is disintegrated into hot water and diluted to an approximately 0.001% suspension. Individual test samples are drawn in approximately 50 to 100 ml portions from the dilute suspension when tested using the standard Kajaani fiber analysis test procedure. The weighted average fiber length may be an arithmetic average, a length weighted average or a weight weighted average and may be expressed by the following equation:

$$\sum_{x_i=0}^{k} (x_i * n_i)/n$$

where

k=maximum fiber length
$x_i$=fiber length
$n_i$=number of fibers having length xi
n=total number of fibers measured.

One characteristic of the average fiber length data measured by the Kajaani fiber analyzer is that it does not discriminate between different types of fibers. Thus, the average length represents an average based on lengths of all different types, if any, of fibers in the sample.

As used herein the term "staple fibers" means discontinuous fibers made from synthetic polymers such as polypropylene, polyester, post consumer recycle (PCR) fibers, polyester, nylon, and the like, and those not hydrophilic may be treated to be hydrophilic. Staple fibers may be cut fibers or the like. Staple fibers can have cross-sections that are round, bicornponent, multicomponent, shaped, hollow, or the like.

While capillary pressure, as used herein, may be determined as known in the art, in one aspect, a capillary pressure of one or more layers or a crossover zone of the present disclosure may be calculated or determined based upon the following:

Referencing U.S. Patent No. 6,152,904 by Matthews et al., and the equations in columns 6-8 thereof, which therein references the Textile Science and Technology volume 7 by Pronoy K. Chatterjee 1985 (ISBN 0-444-42377-X (vol. 7). Chapters 2,4,5.

An estimation for capillary pressure of porous media can be determined, in an aspect, by the following equation:

| Variable | Dimensions | |
|---|---|---|
| $\text{c.t.} = \frac{2}{\sqrt{\pi}} \frac{\gamma}{\left(\frac{1}{\rho_{web}} - \frac{1}{\rho_{avg}}\right)} \frac{\alpha}{980}$ | cm saline | Equation 1 |
| $\alpha = \sum_i \frac{x_i}{r_{i,eff}\,\rho_i} \cos(\theta)$ | $cm^2/g$ | |
| $\rho_{avg} = \left(\sum_i \frac{x_i}{\rho_i}\right)^{-1}$ | $g/cm^3$ | |
| $\rho_{web} = \frac{BW}{10^3 t}$ | $g/cm^3$ | |
| $r_{i,eff} = \frac{V_i}{SA_i}$ | cm | |

for long cylinders

$$r_{i,eff}(\text{cm}) = \frac{\frac{\pi d_i^2 L}{4}}{\pi d_i L} = \frac{d_i}{4 \times 10^4}$$

for spheres

$$r_{i,eff}(\text{cm}) = \frac{\frac{4}{3}\frac{\pi d_i^3}{8}}{\pi d_i^2} = \frac{d_i}{6 \times 10^4}$$

where

$\gamma$ = surface tension of fluid (dyne/ cm)
$\theta_1$ = advancing liquid-solid contact angle (degrees) for component i
$\pi$ = 3.1415906
$\rho_{web}$ = density of web ($g/cm^3$)
$\rho_{avg}$ = mass weighted average component density ($g/cm^3$)
$d_i$ = diameter of component i (microns)
$\rho_i$ = density of component i ($g/cm^3$)
$x_i$ = mass fraction of component i in web
$r_{i,eff}$ = effective fiber radius (cm)
BW = weight of sample/area ($g/m^2$)
t = thickness of sample (mm) under 0.05 psi (23.9 $dyne/cm^2$) or 2.39 Pascal ($N/m^2$)

(continued)

| Variable | Dimensions |
|---|---|
| | load |

The capillary tension given in the equation above is in units of centimeters and represents the distance fluid would be expected to rise against gravity. The units in centimeters may then be converted to pascals based upon the following equation:

$$CP = \rho\, g\, c.t.$$

Where the formula for capillary pressure in dynes per centimeter squared is:

$$CP\left(\frac{dynes}{cm^2}\right) = \frac{2}{\sqrt{\pi}}\,\frac{\gamma}{\left(\frac{1}{\rho_{web}} - \frac{1}{\rho_{avg}}\right)}\,\alpha$$

Or, if based upon kPa:

$$CP(kPa) = \frac{2}{10{,}000\,\sqrt{\pi}}\,\frac{\gamma}{\left(\frac{1}{\rho_{web}} - \frac{1}{\rho_{avg}}\right)}\,\alpha$$

With this equation the capillary pressure can then be calculated as a function of location within a web based upon the web density at that location, the average fiber density at that location, and the specific surface area (alpha) at that location.

Web density at a specific location is determined by the porosity of the porous media as a function of position. A micro-CT scan of the material is one example of a method for providing the raw data necessary for this calculation, an example of a Micro-CT scan of a porous material is shown in Fig. 8A, where the thickness direction is vertical. The direction that material was produced (machine direction) is horizontal.

Next, the image is binarized to determine the location of the fiber surfaces. An example is shown in Fig. 8B.

At a location of interest (in the machine direction for example) the porosity of the structure can be analyzed by splitting the binarized image into rectangles for analysis, an example of which is shown in Fig. 8C.

A macro can then be created, for example, within ImageJ (https://imagej.nih.gov/ij/), to create a set of uniformly sized rectangles that are touching but not overlapping. The average brightness in these rectangles can be measured. The porosity of the web can be determined by location using this method.

The average porosity in a rectangle is the fraction of the rectangle that is not filled with fiber. Because the image is binarized so there are only two values, than the average brightness in the rectangle corresponds with the fraction of the structure filled with fiber. The porosity is one minus the fraction of fibers filled.

In the event that the air is white and that corresponds to a color of 0, and the fiber is black and corresponds with a color of 255 such as the image in figure 2, then the calculation for porosity is

$$\varepsilon = 1 - \frac{\overline{P_{x,y}}}{255}$$

Where P(x,y) bar is the average pixel brightness in that rectangle.

Therefore, the density of a specific location in a structure can be calculated based upon the porosity and the average fiber density for the region of interest.

By definition of porosity:

$$\varepsilon = \frac{V_{air}}{V_{air} + V_{fib}} = \frac{V_{air}}{V_{tot}}$$

And by definition of density, for the exemplary web:

$$\rho_{web} = \frac{M_{fib}}{V_{fib} + V_{air}}$$

Thus, for the fibers:

$$M_{fib} = \rho_{fib} V_{fib}$$

Substituting the two into each other:

$$\rho_{web} = \frac{\rho_{fib} V_{fib}}{V_{tot}}$$

Which allows rearrangement for porosity:

$$1 - \varepsilon = \frac{V_{fib}}{V_{tot}}$$

And, by combination:

$$\rho_{web} = \rho_{fib}(1 - \varepsilon)$$

Thus, in the case of cellulose fibers that have a density of 1.53 grams per cubic centimeters the density plot of Fig. 8D may be obtained for exemplary fibrous structure in Fig. 8A.

However, the alpha value in equation 1 above captures information about the fiber makeup of the web. If the material is not homogenous in the fiber makeup, then the alpha value is not constant throughout the material. It is possible to incorporate an alpha value that changes by location. This can occur for example if the fiber structure is layered and the two layers are made up of different fibers. The alpha value will change if either the fiber types change or the mixture of those fiber types change.

Different methods may be employed to determine the alpha value. Producers of the materials can know the specific details of the fibers going into each layer including the details required to calculate alpha Alternatively, it is possible through other fiber identification methods known in the industry to determine fiber types from unknown web samples. Single fiber contact angle measurement techniques are also known in the industry and can be employed to determine the contact angle a fiber makes with the fluid of interest.

An example is shown in table 1 below where the fiber types remain the same, but the fiber ratios change by location.

*Table 1. Calculation of Alpha for two different layers*

| Top Layer | | | | | | |
|---|---|---|---|---|---|---|
| | Contact Angle (deg) | Fiber Diameter (micron) | Fiber Density (g/cm$^3$) | Mass Fraction | $r_{i,eff}$ | [illegible] |
| Pulp | 25 | 18 | 1.56 | 0.3 | 0.00045 | 387.311 |

(continued)

| Top Layer | | | | | | |
|---|---|---|---|---|---|---|
| | Contact Angle (deg) | Fiber Diameter (micron) | Fiber Density (g/cm$^3$) | Mass Fraction | $r_{i,eff}$ | [illegible] |
| Synthetic | 70 | 30 | 0.98 | 0.7 | 0.00075 | 325.7335 |
| | | | | | alpha = | 713.0445 |
| | | | | | | |
| Bottom Layer | | | | | | |
| | Contact Angle (deg) | Fiber Diameter (micron) | Fiber Density (g/cm$^3$) | Mass Fraction | $r_{i,eff}$ | [illegible] |
| Pulp | 25 | 18 | 1.56 | 0.7 | 0.00045 | 903.7257 |
| Synthetic | 70 | 30 | 0.98 | 0.3 | 0.00075 | 139.6001 |
| | | | | | alpha = | 1043,326 |

In the example of Table 1, either through experimental testing as described above, or information provided by the manufacturer of the article, the alpha value splits evenly above the centerline of the material. The centerline in this example was determined through analysis of the micro-CT image, as shown in Fig. 8E.

This updated alpha data then can be incorporated into the calculation for capillary pressure by replacing the constant alpha value by the position dependent value.

It should be noted that the micro-CT analysis shown in Fig. 8E is a single slice representing a fiber along a cut plane through the material. The y-axis in the figures is the through plane thickness direction of the web. The x-axis in the figures is the machine direction of the material. Some materials will have density variation by MD, CD location in the web such as happens with embossing processes and the like. In these cases appropriate slices from the micro-CT images should be taken to gather data that represents porosity changes in the thickness direction as well as in the plane of the web (MD,CD). The method described above functions for 3D data sets (sets of image slices) as well as individual image slices.

Method for determining the centerline of the sample.

The image in figure 8B can be analyzed to determine the location of each individual fiber in the image. This can be done for example with ImageJ using the Analyze Particle algorithm.

The data can then be analyzed to determine the midplane position. In this example a simple linear regression line may represent the midplane, however, as discussed above, other regressions may be obtained and may be analyzed accordingly.

## DETAILED DESCRIPTION

It is to be understood by one of ordinary skill in the art that the present discussion is a description of exemplary aspects only, and is not intended as limiting the broader aspects of the present disclosure.

Generally speaking, the present disclosure is directed to a multi-layered fibrous web, that may be a wiping product, that exhibits improved pick-up speed and absorbent capacity. The present disclosure has found that by carefully selecting a first layer and a second layer to have targeted capillary pressures, and carefully forming the multi-layer fibrous web according to the present disclosure, both pick-up speed and absorbent capacity can be increased, and in one aspect, can be increased even when at least partially saturated. Particularly, the present disclosure has found that by carefully forming a multi-layer fibrous web according to the present disclosure, a crossover zone is formed at the interface between the first layer and the second layer, such that the crossover zone has a capillary pressure between the capillary pressure of the two adjacent layers. For instance, in one aspect, a multi-layer fibrous web according to the present disclosure may include at least one high pick-up speed layer (at least one first layer) having a relatively high capillary pressure, for example only, such as greater than 33 kilopascals at zero saturation (which will be discussed in greater detail below), and at least one high capacity layer (at least one second layer) having a lower capillary pressure, such as less than about 33 kilopascals at zero saturation (which will be discussed in greater detail below). However, unlike previous multi-layer fibrous webs, the present disclosure has surprisingly found that by using a foaming method according to the present disclosure to form the multi-layer fibrous web, a crossover zone is formed that has a capillary pressure between the capillary pressure of the high pick-up speed layer and the capillary pressure of the high capacity layer, where, as discussed above, in previous multi-layer fibrous web, the capillary pressure at the interface of two or more layers was less than the capillary pressure of both layers. Thus, without wishing to be bound by theory, the present disclosure believes that the relatively high capillary

pressure at the crossover zone allows higher pick-up speeds even as the multi-layer fibrous web becomes saturated, such as a saturation level of 60% or greater, as the liquid is able to move through the crossover zone, and be absorbed in the high capacity layer, and thus be drawn away from the high pick-up speed layer in the x, y, and z directions.

Thus, in one aspect, a multi-layer fibrous web according to the present disclosure has an absorbent capacity (grams of fluid per gram of wipe (g/g)),measured as the total mass of liquid absorbed according toa Gravimetric Absorbency Testing System (GATS) using the M/K system GATS test Analysis Program Version 4.3.4, of about 5.5 g/g or greater, such as about 5.6 g/g or greater, such as about, 5.7 g/g or greater, such as about 5.8 g/g or greater, such as about 5.9 g/g or greater, such as about 6 g/g or greater, such as about 6.1 g/g or greater such as about 6.2 g/g or greater, such as about 6.3 g/g or greater, such as about 6.4 g/g or greater, such as about 6.5 g/g or greater, such as about 6.6 g/g or greater, such as about 6.7 g/g or greater, such as about 6.8 g/g or greater, such as about 6.9 g/g or greater, such as about 7 g/g or greater.

Furthermore, as discussed above, in one aspect a multi-layer fibrous web according to the present disclosure has a high absorbent rate. Thus, in one aspect, a multi-layer fibrous web according to the present disclosure has an absorbent rate measured as the estimated rate in (grams/grams)/sec$^{0.5}$ based on a the fit to the absorption curve according to the Gravimetric Absorbency Testing System (GATS) using the M/K system GATS test using Analysis Program Version 4.3.4, of about 1.6 1/seconds$^{0.5}$ or greater, such as about 1.7 1/seconds$^{0.5}$ or greater, such as about 1.8 1/seconds$^{0.5}$ or greater, such as about 1.9 1/seconds$^{0.5}$ or greater, such as about 2 1/seconds$^{0.5}$ or greater, such as about 2.1 1/seconds$^{0.5}$ or greater, such as about 2.2 1/seconds$^{0.5}$ or greater, such as about 2.3 1/seconds$^{0.5}$ or greater, such as about 2.4 1/seconds$^{0.5}$ or greater, such as about 2.5 1/seconds$^{0.5}$ or greater, such as about 2.6 1/seconds$^{0.5}$ or greater, such as about 2.7 1/seconds$^{0.5}$ or greater.

Furthermore, in one aspect, the multi-layer fibrous web according to the present disclosure may have any of the above absorbent rates even at about 5% saturation or greater, such as about 10% saturation or greater, such as about 15% saturation or greater, such as about 20% saturation or greater, such as about 25% saturation or greater, such as about 30% saturation or greater, such as about 35% saturation or greater, such as about 40% saturation or greater, such as about 45% saturation or greater, such as about 50% saturation or greater, such as about 55% saturation or greater, such as about 60% saturation or greater, such as about 65% saturation or greater, such as about 70% saturation or greater, such as about 75% saturation or greater, such as about 80% saturation or greater, such as about 85% saturation or greater, such as about 90% saturation or greater. Thus, in one aspect, the multi-layer fibrous web according to the present disclosure may have a higher absorbent rate at the same in-use saturation as a multi-layer fibrous web that does not have a crossover zone according to the present disclosure.

As discussed above, the multi-layer fibrous web of the present disclosure includes one or more high pick-up speed layers (one or more first layers), and one or more high capacity layers (one or more second layers). For instance, at least one of the high capacity layers can be formed from elastomeric fibers, three-dimensional fibers, debonded cellulosic fibers, and mixtures thereof. At least one of the high pick-up speed layers, on the other hand, is made from pulp fibers. In order to form the multi-layer fibrous web having distinct layers of dissimilar materials with resilient properties, the web is not capable of being formed through conventional wet laying processes. Instead, the multi-layer fibrous web can be formed through processes that use gases alone or gases mixed with water to form the individual layers into a coherent web. In one aspect, for instance, the multi-layer fibrous web is formed according to an air laying process or a multi-phase process, such as a foam-forming process.

Referring to FIG. 1, for exemplary purposes only, one aspect of a multi-layer fibrous web 100 made in accordance with an aspect of the present disclosure is shown. As illustrated, the multi-layer fibrous web 100 includes distinct fibrous layers made from different materials. The multi-layer fibrous web 100, includes a first layer 102 and a second layer 104. The first layer 102, for instance, may be a high pick-up speed layer while the second layer 104 may be a high capacity layer. Of course, it should be understood that the first layer 102, the second layer 104, or both the first layer 102 and second layer 104, may include two or more webs or layers (not shown), such that two or more webs or layers form one or more of the first layer 102 and/or second layer 104.

Nonetheless, as shown in Fig. 1, the multi-layer fibrous web 100 of the present disclosure also includes a crossover zone 106. Particularly, crossover zone 106 is not a discrete layer (in the sense that it is not formed as a separate layer during formation of the multi-layer fibrous web 100), but is instead formed due to intermixing of the first layer 102 and second layer 104 while carefully preparing a multi-layer fibrous web according to the present disclosure. Particularly, the present disclosure has found that the crossover zone 106 may be formed by carefully selecting a foaming process that is capable of forming a multi-layer fibrous web with dissimilar materials, in addition to careful placement of the divider, or lamella, during production, which will be discussed in greater detail below.

Nonetheless, in one aspect, the crossover zone 106 is located at an interface between the first layer 102 and second layer 104 (e.g. on an interior of the multi-layer fibrous web 100), and may form about 1 wt.% to about 50 wt.% of the multilayered wiping product 100, such as about 2.5 wt.% to about 45 wt.%, such as about 5 wt.% to about 40 wt.%, such as about 7.5 wt.% to about 35 wt.%, such as about 10% to about 25 wt.%, such as about 12.5 wt.% to about 20 wt.%, or any ranges or values therebetween.

In one aspect, the crossover zone 106 may include about 1 wt.% to about 99 wt.% of fibers from the first layer 102, such as about 5 wt.% to about 95wt.%, such as about 15 wt.% to about 85 wt.%, such as about 25 wt.% to about 75 wt.%, such as about 40 wt % to about 60 wt.%, or any ranges or values therebetween. Additionally or alternatively, the crossover zone 106 may include about 1 wt.% to about 99 wt.% of fibers from the second layer 104, such as about 5 wt.% to about 95 wt.%, such as about 15 wt.% to about 85 wt.%, such as about 25 wt.% to about 75 wt.%, such as about 40 wt.% to about 60 wt.%, or any ranges or values therebetween.

Of course, while the crossover layer 106 has been discussed in regards to the types of fibers, and the weight percentage of such fibers that form the crossover layer 106, it should be understood that, as the crossover layer 106 is formed by intermixing of the first layer 102 and second layer 104 during formation of the multi-layer fibrous web, in one aspect, the crossover layer 106 may exhibit a gradient of fibers, such that more first layer 102 fibers are positioned adjacent to the first layer 102 and decrease in concentration while moving across the crossover zone 106 towards the second layer 104. Similarly, in one aspect, more second layer 104 fibers are positioned adjacent to the second layer 104 and decrease in concentration while moving across the crossover zone 106 towards the first layer 102. Of course, it should be understood that, in one aspect, first layer 102 fibers may be immediately adjacent to the second layer 104, and/or second layer fibers 104 may be immediately adjacent to the first layer 102, and, furthermore, in an aspect, may be generally evenly distributed across the crossover zone 106.

The first layer 102 and the second layer 104 are made from different types of fibers. The first layer 102 and optionally the second layer 104 contain pulp fibers. Suitable fibers for forming the first layer 102 and the second layer 104 include any natural or synthetic cellulosic fibers including, but not limited to nonwoody fibers, such as cotton, abaca, kenaf, sabai grass, flax, esparto grass, straw, jute hemp, bagasse, milkweed floss fibers, and pineapple leaf fibers; and woody or pulp fibers such as those obtained from deciduous and coniferous trees, including softwood fibers, such as northern and southern softwood kraft fibers; hardwood fibers, such as eucalyptus, maple, birch, and aspen. Pulp fibers can be prepared in high-yield or low-yield forms and can be pulped in any known method, including kraft, sulfite, high-yield pulping methods and other known pulping methods. Fibers prepared from organosolv pulping methods can also be used.

A portion of the fibers, such as up to about 50% or less by dry weight, such as about 2.5% to about 45% by dry weight, such as from about 5% to about 40% by dry weight, such as about 10% to about 35% by dry weight, can be synthetic fibers such as rayon, polyolefin fibers, polyester fibers, bicomponent sheath-core fibers, multi-component binder fibers, and the like. Synthetic cellulose fiber types include rayon in all its varieties and other fibers derived from viscose or chemically-modified cellulose. Chemically treated natural cellulosic fibers can be used such as mercerized pulps, chemically stiffened or crosslinked fibers, or sulfonated fibers. For good mechanical properties in using papermaking fibers, it can be desirable that the fibers be relatively undamaged and largely unrefined or only lightly refined. Recycled fibers or virgin fibers may be used. Mercerized fibers, regenerated cellulosic fibers, cellulose produced by microbes, rayon, and other cellulosic material or cellulosic derivatives can be used. Suitable papermaking fibers can also include recycled fibers, virgin fibers, or mixes thereof. In certain aspects capable of high bulk and good compressive properties, the fibers can have a Canadian Standard Freeness of at least 200, more specifically at least 300, more specifically still at least 400, and most specifically at least 500.

Other papermaking fibers that can be used in the present disclosure include paper broke or recycled fibers and high yield fibers. High yield pulp fibers are those papermaking fibers produced by pulping processes providing a yield of about 65% or greater, more specifically about 75% or greater, and still more specifically about 75% to about 95%. Yield is the resulting amount of processed fibers expressed as a percentage of the initial wood mass. Such pulping processes include bleached chemithermomechanical pulp (BCTMP), chemithermomechanical pulp (CTMP), pressure/pressure thermomechanical pulp (PTMP), thermomechanical pulp (TMP), thermomechanical chemical pulp (TMCP), high yield sulfite pulps, and high yield Kraft pulps, all of which leave the resulting fibers with high levels of lignin. High yield fibers are well known for their stiffness in both dry and wet states relative to typical chemically pulped fibers.

The first layer 102 and/or the second layer 104 can also be formed without a substantial amount of inter fiber-to-fiber bond strength. In this regard, the fiber furnish used to form the layers can be treated with a chemical debonding agent. Suitable debonding agents that may be used in the present disclosure include cationic debonding agents such as fatty dialkyl quaternary amine salts, mono fatty alkyl tertiary amine salts, primary amine salts, imidazoline quaternary salts, silicone quaternary salt and unsaturated fatty alkyl amine salts. Other suitable debonding agents are disclosed in U.S. Pat. No. 5,529,665 to Kaun. In particular, Kaun discloses the use of cationic silicone compositions as debonding agents.

In one aspect, the debonding agent used in the process of the present disclosure is an organic quaternary ammonium chloride and, particularly, a silicone-based amine salt of a quaternary ammonium chloride. For example, the debonding agent can be PROSOFT brand, marketed by the Hercules Corporation. The debonding agent can be added to the fibers in an amount of from about 1 kg per metric tonne to about 10 kg per metric tonne of fibers.

In an alternative aspect, the debonding agent can be an imidazoline-based agent. The imidazoline-based debonding agent can be obtained, for instance, from the Witco Corporation. The imidazoline-based debonding agent can be added in an amount of between 2.0 to about 15 kg per metric tonne.

In one aspect, the first layer 102 is formed from fibers discussed above, and the second layer 104 is formed from

different fibers. For instance, in one aspect, fibers used to produce the second layer 104 produce a web with a significant amount of void volume for absorbing liquids, and additionally, may impart a resilient and/or elastic properties to the second layer 104. In general, the second layer 104 can be formed from elastomeric fibers or mixtures thereof with three-dimensional fibers, debonded cellulosic fibers.

The second layer 104 contains fibers made from an elastomeric polymer. As used herein, "elastomeric" is the property of a material that refers to its ability to extend when under a load and recover a significant portion of the load-induced extension after the load is removed. "Elastomeric" and "elastic" are used interchangeably to refer to a material that is generally capable of recovering its shape after deformation when the deforming force is removed. Specifically, as used herein, elastic or elastomeric is meant to be that property of any material which, upon application of an elongating force, permits the material to be stretchable to a stretched length which is at least about 25 percent greater than its relaxed unstretched length, and that will cause the material to recover at least 40 percent of its elongation upon release of the stretching force.

Materials suitable for use in preparing the thermoplastic elastomeric fibers herein include diblock, triblock, or multi-block elastomeric copolymers such as olefinic copolymers, including styreneisoprene-styrene, styrene-butadiene-styrene, styrene-ethylene/butylene-styrene, or styreneethylene/propylene-styrene, which may be obtained under the trade designation KRATON® elastomeric resin; polyurethanes, including those available under the trade name LYCRA® polyurethane; polyamides, including polyether block amides available under the trade name PEBAX® polyether block amide; polyesters, such as those available under the trade name HYTREL® polyester; and single-site or metallocene-catalyzed polyolefins having density less than about 0.89 grams/cc, available under the trade name AFFINITY®.

A number of block copolymers can be used to prepare the thermoplastic elastomeric fibers. Such block copolymers generally comprise an elastomeric midblock portion and a thermoplastic endblock portion. The block copolymers generally have a three-dimensional physical crosslinked structure below the endblock portion glass transition temperature (T2) and are elastomeric. The block copolymers are also thermoplastic in the sense that they can be melted, formed, and resolidified several times with little or no change in physical properties (assuming a minimum of oxidative degradation).

One way of synthesizing such block copolymers is to polymerize the thermoplastic endblock portions separately from the elastomeric midblock portions. Once the midblock and endblock portions have been separately formed, they can be linked. Typically, midblock portions can be obtained by polymerizing di- and tri-unsaturated C4-C10hydrocarbons such as, for example, dienes such as butadiene, isoprene, and the like, and trienes such as 1, 3, 5-heptatriene, and the like. When an endblock portion A is joined to a midblock portion B, an A-B block copolymer unit is formed, which unit can be coupled by various techniques or with various coupling agents C to provide a structure such as A-B-A, which is believed to comprise two A-B blocks joined together in a tail-to-tail A-B-C-B-A arrangement. By a similar technique, a radial block copolymer can be formed having the formula (A-B)nC, wherein C is the hub or central polyfunctional coupling agent and n is a number greater than 2. Using the coupling agent technique, the functionality of C determines the number of A-B branches.

Endblock portion A generally comprises a poly(vinylarene), such as polystyrene, having an average molecular weight between 1,000 and 60,000. Midblock portion B generally comprises a substantially amorphous polyolefin such as polyisoprene, ethylene/propylene polymers, ethylene/butylene polymers, polybutadiene, and the like, or mixtures thereof, having an average molecular weight between about 5,000 and about 450,000. The total molecular weight of the block copolymer is suitably about 10,000 to about 500,000 and more suitably about 200,000 to about 300,000. Any residual unsaturation in the midblock portion of the block copolymer can be hydrogenated selectively so that the content of olefinic double bonds in the block copolymers can be reduced to a residual proportion of less than 5 percent and suitably less than about 2 percent. Such hydrogenation tends to reduce sensitivity to oxidative degradation and may have beneficial effects upon elastomeric properties.

Suitable block copolymers comprise at least two substantially polystyrene endblock portions and at least one substantially ethylene/butylene mid-block portion. As an example, ethylene/butylene typically may comprise the major amount of the repeating units in such a block copolymer and can constitute, for example, 70 percent by weight or more of the block copolymer. The block copolymer can have three or more arms, and good results can be obtained with, for example, four, five, or six arms. The midblock portion can be hydrogenated, if desired.

Linear block copolymers, such as A-B-A, A-B-A-B-A or the like, are suitably selected on the basis of endblock content, large endblocks being preferred. For polystyrene-ethylene/butylene-polystyrene block copolymers, a styrene content in excess of about 10 weight percent is suitable, such as between about 12 to about 30 weight percent. With higher styrene content, the polystyrene endblock portions generally have a relatively high molecular weight. A commercially available example of such a linear block copolymer is a styrene-ethylene/butylene-styrene block copolymer which contains about 13 weight percent styrene units and essentially the balance being ethylene/butylene units, commercially available under the trade designation KRATON® G1657 elastomeric resin. Typical properties of KRATON® G1657 elastomeric resin are reported to include a tensile strength of 3400 pounds per square inch (2×106 kilograms per square meter), a 300 percent modulus of 350 pounds per square inch (1.4×105 kilograms per square meter), an elongation of 750

percent at break, a Shore A hardness of 65, and a Brookfield viscosity, when at a concentration of 25 weight percent in a toluene solution, of about 4200 centipoise at room temperature. Another suitable elastomer, KRATON® G2740, is a styrene butadiene block copolymer blended with tackifier and low density polyethylene.

Other exemplary elastomeric materials which may be used include polyurethane (such as -(A-B)-n where A is a hard block and B is a rubber block) elastomeric materials such as, for example, those available under the trademark ESTANE® or MORTHANE®, polyetherester elastomeric materials such as, for example, those available under the trade designation HYTREL®, and those known as ARNITEL®.

The thermoplastic copolyetherester elastomers include copolyetheresters having the general formula:

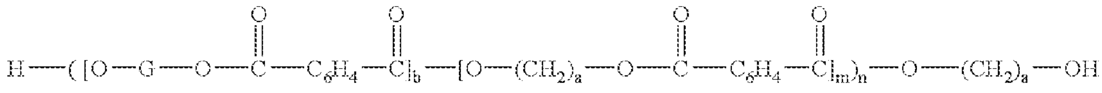

where "G" is selected from the group consisting of poly(oxyethylene)-alpha, omega-diol, poly(oxypropylene)-alpha,omega-diol, poly(oxytetra-methylene)-alpha,omega-diol and "a" and "b" are positive integers including 2, 4 and 6, "m" and "n" are positive integers including 1-20. Such materials generally have an elongation at break of from about 600 percent to 750 percent when measured in accordance with ASTM D-638 and a melt point of from about 350° F. to about 400° F. (176 to 205° C.) when measured in accordance with ASTM D-2117. Another suitable material is a polyetherester block amide copolymer having the formula:

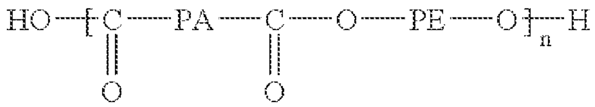

where n is a positive integer, PA represents a polyamide polymer segment and PE represents a polyether polymer segment. In particular, the polyether block amide copolymer has a melting point of from about 150° C. to about 170° C., as measured in accordance with ASTM D-789; a melt index of from about 6 grams per 10 minutes to about 25 grams per 10 minutes, as measured in accordance with ASTM D-1238, condition Q (235° C./1 Kg load); a modulus of elasticity in flexure of from about 20 MPa to about 200 MPa, as measured in accordance with ASTM D-790; a tensile strength at break of from about 29 MPa to about 33 MPa as measured in accordance with ASTM D-638 and an ultimate elongation at break of from about 500 percent to about 700 percent as measured by ASTM D-638. A particular aspect of the polyether block amide copolymer has a melting point of about 152° C. as measured in accordance with ASTM D-789; a melt index of about 7 grams per 10 minutes, as measured in accordance with ASTM D-1238, condition Q (235° C./1 Kg load); a modulus of elasticity in flexure of about 29.50 MPa, as measured in accordance with ASTM D-790; a tensile strength at break of about 29 MPa, as measured in accordance with ASTM D-639; and an elongation at break of about 650 percent as measured in accordance with ASTM D-638. Such materials are available in various grades under the trade designation PEBAX®.

Elastomeric polymers also include copolymers of ethylene and at least one vinyl monomer such as, for example, vinyl acetates, unsaturated aliphatic monocarboxylic acids, and esters of such monocarboxylic acids.

Other suitable elastomeric polymers include, without limitation, elastomeric (single-site or metallocene catalyzed) polypropylene, polyethylene and other alpha-olefin homopolymers and copolymers, having density less than about 0.89 grams/cc; ethylene vinyl acetate copolymers; and substantially amorphous copolymers and terpolymers of ethylene-propylene, butene-propylene, and ethylene-propylene-butene.

Single-site catalyzed elastomeric polymers (for example, constrained geometry or metallocene-catalyzed elastomeric polymers) may be used. The single-site process for making polyolefins uses a single-site catalyst which is activated (i.e., ionized) by a co-catalyst.

Polymers produced using single-site catalysts have a narrow molecular weight distribution. "Narrow molecular weight distribution polymer" refers to a polymer that exhibits a molecular weight distribution of less than about 3.5. As is known in the art, the molecular weight distribution of a polymer is the ration of the weight average molecular weight of the polymer to the number average molecular weight of the polymer. Methods of determining molecular weight distribution are described in the Encyclopedia of Polymer Science and Engineering, Volume 3, Pages 299-300 (1985). Polydispersities (Mw/Mn) of below 3.5 and even below 2 are possible for single-site produced polymers. These polymers also have a narrow short chain branching distribution when compared to otherwise similar Ziegler-Natta produced polymers.

It is also possible to use a single-site catalyst system to control the isotactivity of the polymer quite closely when stereo selective metallocene catalysts are employed. In fact, polymers have been produced having an isotacticity in excess of 99 percent. It is also possible to produce highly syndiotactic polypropylene using this system.

Such polymers are available under the trade name EXXPOLL® for polypropylene based polymer and EXACT® for polyethylene based polymers or under the name ENGAGE®.

In addition to elastomeric fibers, the second layer 104 may contain three-dimensional fibers. Three-dimensional

fibers include, for instance, curled fibers, crimped fibers, and the like. Three-dimensional fibers can be formed from synthetic fibers or from natural fibers, such as cellulose fibers. In one aspect, the three-dimensional fibers may be formed from an elastomeric polymer.

Natural fibers, for instance, can be curled or crimped through physical, chemical or mechanical means. The extent of curl incorporated into the fiber can be quantified through the Curl Index Test. As used herein, the term "Curl Index" is determined using an OpTest Fiber Quality Analyzer (FQA) from OpTest Equipment, Hawkesbury, Ontario, Canada Model No. Code LDA 96. Curled cellulose fibers that may be incorporated into the second layer 104 of the multi-layered web of the present disclosure can generally have a curl index of greater than about 0.15, such as greater than about 0.18, such as greater than about 0.2, such as greater than about 0.22, such as greater than about 0.25 and generally less than about 0.4, such as less than about 0.3.

Synthetic fibers can be curled or crimped using various different techniques. In one aspect, for instance, the fiber can be formed from a polymer or mixture of polymers that cause the fiber to curl or crimp when heat treated. In other aspects, however, the synthetic fibers can be curled or crimped using chemical means or mechanical means. The three-dimensional synthetic fibers can include fibers that are curled in two dimensions and/or helically-shaped fibers.

In one aspect, the three-dimensional fibers may comprise multi-component fibers, such as bicomponent fibers. The bi-component fibers can contain dissimilar polymers in a side-by-side configuration, eccentric configuration, or in an island-in-the-sea configuration. When heat treated or subjected to mechanical means, the presence of the two different polymers can cause the fibers to crimp or curl. The fibers, for instance, can be heat treated by traversal under a hot air knife or hot air diffuser. Crimping can result due to differential cooling of the polymer components of the fibers. After the fibers are crimped or curled, the fibers can optionally be subjected to a further heat treating step in order to lock in the three-dimensional conformation. The synthetic fibers can be made from all different types of polymers including polyolefin polymers such as polyethylene and/or polypropylene, polyester polymers, polyamide polymers, and the like. In one aspect, the synthetic fibers are bicomponent fibers made from a polyethylene and a polypropylene. In one aspect, the polyethylene may have greater crystallinity which causes the polyethylene chains to recrystallize upon cooling and results in the polyethylene polymer shrinking and inducing crimp or curl into the fiber.

Other multi-component fibers that may be used in accordance with the present disclosure include bi-component fibers having a sheath-core configuration in which a polyethylene polymer is used to form the sheath while the core is made from a polyester polymer, such as a polyethylene terephthalate polymer. Many of the above described bi-component fibers also can be used as binding fibers if desired. When subjected to a certain amount of thermal energy, for instance, the sheath polymer on one fiber can bond to the sheath polymer on an adjacent fiber. Interfiber bonding may further increase the elasticity or resiliency of the second layer.

In another aspect, the second layer may contain debonded fibers. The debonded fibers can be present alone or in combination with three-dimensional fibers and/or elastomeric fibers. Debonded fibers, for instance, can include cellulose fibers treated with a debonding agent as described above. The cellulose fibers may comprise pulp fibers, plant-based fibers, or regenerated cellulose fibers.

In an alternative aspect, the debonded fibers include alpha cellulose fibers. Alpha cellulose fibers are fibers that contain low amounts of hemicellulose which is responsible for hydrogen bonding. Alpha cellulose fibers are commercially available from numerous sources including Yak Papermill.

The fibers contained in the second layer 104 of the multi-layer fibrous web 100 can have various different fiber lengths. In general, the fibers have a length of greater than about 2 mm. For instance, the fibers can have a length of greater than about 3 mm, such as greater than about 5 mm, such as greater than about 10 mm, such as greater than about 20 mm, such as greater than about 25 mm, such as greater than about 30 mm, such as greater than about 35 mm, such as greater than about 40 mm. The fibers generally have a length of less than about 300 mm, such as less than about 200 mm, such as less than about 100 mm, such as less than about 75 mm, such as less than about 50 mm.

The relative weights between the second layer 104 and the first layer 102 and can vary depending upon various factors including the product being formed, the type of fibers used to make the product, and the desired final properties of the multi-layer fibrous web. In general, the second layer 104 is at least about 10% by weight, such as at least about 15% by weight, such as least about 20% by weight, such as at least about 25% by weight, such as at least about 30% by weight, such as at least about 35% by weight, such as at least about 40% by weight, such as at least about 45% by weight of the multi-layered web. The second layer is generally less than about 60% by weight of the web, such as less than about 50% by weight of the web, such as less than about 40% by weight of the web, such as less than about 35% by weight of the web.

Furthermore, while crimped and eccentric fibers were discussed above, the properties of the individual fibers and resulting web(s) may be further altered based upon the ratio of the jet speed (speed at which the slurry exits the jets onto the forming fabric) to the forming fabric speed (speed at which the forming fabric is moving). For example, the fibers can be laid down with a high degree of machine direction orientation, or a greater degree of irregularity, based upon the jet speed to forming fabric speed. Thus in one aspect, a layer, or layers formed according to the present disclosure may be formed using a ratio of the jet speed to the forming fabric speed of about 0.5:1 to about 5:1, such as about .75:1 to about 4:1, such as about 1:1 to about 3:1, or any ranges or values therebetween.

The basis weight of the multi-layer fibrous webcan also vary depending upon the type of product being produced. In general, the basis weight of the multi-layer fibrous webis greater than about 10 gsm, such as greater than about 15 gsm, such as greater than about 20 gsm, such as greater than about 25 gsm, such as greater than about 30 gsm, such as greater than about 40 gsm, such as greater than about 50 gsm, such as greater than about 60 gsm, and generally less than about 200 gsm, such as less than about 140 gsm, such as less than about 130 gsm, such as less than about 120 gsm, such as less than about 110 gsm, such as less than about 100 gsm.

Nonetheless, in one aspect, the first layer may have a capillary pressure at 0% saturation of about 30 kilopascals (kPa) or greater, such as about 33 kPa or greater, such as about 35 kPa or greater, such as about 40 kPa or greater, such as about 45 kPa or greater, such as about 50 kPa or greater.

Furthermore, the second layer 104 may have a capillary pressure at 0% saturation of about 33 kPa or less, such as about 30 kPa or less, such as about 27.5 kPa or less, such as about 25 kPa or less, such as about 22.5 kPa or less, such as about 20 kPa or less, such as about 17.5 kPa or less, such as about 15 kPa or less.

Surprisingly, the crossover zone 106 of the present disclosure may exhibit a capillary pressure of about 15 kPa to about 50 kPa, such as about 17.5 kPa to about 45 kPa, such as about 20 kPa to about 40 kPa, such as about 27.5 kPa to about 35 kPa, at 0% saturation, or any ranges or values therebetween. Additionally or alternatively, in one aspect, the crossover zone 106 may have any capillary pressure, or range of capillary pressures, such that the capillary pressure of the crossover zone 106 is maintained between the capillary pressure of the first layer 102 and the second layer 104.

In one aspect, one or more layers may have the capillary pressure recorded by any method as known in the art. However, as discussed above, in one aspect, the crossover zone is not a discrete layer, and instead formed by carefully controlling the degree of intermixing of a first web and second web according to the present disclosure. Thus, in one aspect, the capillary pressure of the crossover zone or one or more layers is measured according to the Micro-CT analysis discussed in the definitions section above.

Notwithstanding the fibers selected, the process and techniques used for producing the multi-layer fibrous web can vary depending upon the particular application. In general, any process may be used to form the multi-layer fibrous web that is capable of processing the different fibers used to produce the web, as well as produce a crossover zone according to the present disclosure. In particular, a process is to be selected that can not only process synthetic fibers, such as elastomeric fibers, three-dimensional fibers and the like but also can produce a layer with the desired absorption properties. Various techniques that can be used to produce the multi-layer fibrous web include multi-phase forming, air forming, bonded carded processes, and combinations thereof.

In one aspect, for instance, the multi-layer fibrous web is produced through a multi-phase foam forming process. For example, in one aspect, a foam is first formed by combining water with a foaming agent. The foaming agent, for instance, may include any suitable surfactant. In one aspect, for instance, the foaming agent may comprise sodium lauryl sulfate, which is also known as sodium dodecyl sulfate. Other foaming agents include sodium lauryl ether sulfate or ammonium lauryl sulfate. In other aspects, the foaming agent may comprise any suitable cationic and/or amphoteric surfactant. For instance, other foaming agents include fatty acid amines, amides, amine oxides, fatty acid quaternary compounds, and the like.

The foaming agent is combined with water generally in an amount greater than about 10 ppm, such as greater than about 50 ppm, such as greater than about 100 ppm, such as greater than about 200 ppm, such as greater than about 300 ppm, such as greater than about 400 ppm, such as greater than about 500 ppm, such as greater than about 600 ppm, such as greater than about 700 ppm. One or more foaming agents are generally present in an amount less than about 15% by weight, such as in an amount less than about 10% by weight, such as in an amount less than about 5% by weight, such as in an amount less than about 1% by weight.

Once the foaming agent and water are combined, the mixture is blended or otherwise subjected to forces capable of forming a foam. A foam generally refers to a porous matrix, which is an aggregate of hollow cells or bubbles which may be interconnected to form channels or capillaries.

The foam density can vary depending upon the particular application and various factors including the fiber furnish used. In one aspect, for instance, the foam density of the foam can be greater than about 200 g/L, such as greater than about 250 g/L, such as greater than about 300 g/L. The foam density is generally less than about 600 g/L, such as less than about 500 g/L, such as less than about 400 g/L, such as less than about 350 g/L. In one aspect, for instance, a lower density foam is used having a foam density of generally less than about 350 g/L, such as less than about 340 g/L, such as less than about 330 g/L. The foam will generally have an air content of about 40% or greater, such as about 50% or greater, such as about 60% or greater. The air content is generally about 75% or less by volume, such as about 70% or less by volume, such as about 65% or less by volume, such as about 60% or less by volume, such as about 50% or less by volume.

In order to form the multi-layer fibrous web, the foam is combined with each fiber furnish that is used to form the first layer 102, to form suspension 202, and the second layer 104, to form suspension 204. Referring to Figs. 2A and 2B, each foam suspension of fibers is then pumped to a tank and from the tank fed to a headbox 200. For instance, a single headbox may be used that can keep the different fiber suspensions separated and ejected onto forming surface one at a time. In an alternative aspect, multiple headboxes may be used that are each used to form a different layer in the resulting

web.

In one aspect, the different layers are fed onto a forming fabric 206 so as to form the multilayered web and conveyed downstream and dewatered in dewatering zones 210 (where arrows 214 show the machine direction/direction of travel of the suspensions 202 and 204). For instance, the dewatering zones 210 can include a plurality of vacuum devices 212, such as vacuum boxes and vacuum rolls for removing water. In addition, the newly formed web can also be placed in communication with a steam box above a pair of vacuum rolls for increasing dryness(not shown).

However, in one aspect, in addition to carefully selecting fibers for capillary pressure, the present disclosure has found that a divider or lamella 208 that is retracted (such as generally shown in Fig. 2A) may improve the degree of intermixing of the first layer 102 and second layer 104 in order to form a crossover zone 106 according to the present disclosure. For instance, the present disclosure has found that by at least partially retracting the lamella 208, mixing of fibers from suspension 202 and 204 may be carefully controlled to form a multi-layer fibrous web according to the present disclosure, that also includes a crossover zone 106 due to the fiber-to-fiber mixing in the head box. Conversely, as shown in Fig. 2B, the lamella/divider 208 is fully pushed in, allowing no (or very little) fiber-to-fiber mixing in the headbox, creating little to no crossover zone, and instead forming two generally distinct or separate layers (which will be discussed in greater detail below in regards to the examples). Of course, it should be understood that, in some aspects, the lamella/divider 208 may be partially or fully pulled out, or partially pushed in, in order to form a crossover zone 106 according to the present disclosure, and thus, that Figs. 2A and 2B showing a fully in and fully out arrangement are for example only.

Using a foam-forming process can provide various advantages and benefits depending upon the particular application. For example, foam-forming processes are capable of processing all the different fiber types that may be used to form the first layer 102 and second layer 104 of the multi-layer fibrous web. Foam-forming processes also allow for a foam structure and rheology that can be varied in order to vary the final density of the product. Various different surfactants can be used also to vary the bubble size distribution of the foam and the resulting properties of the web. Not only do foam-forming processes allow for the processing of relatively long synthetic fibers, but foam-forming also produces larger pores compared to that of wet laid sheets which can provide an optimum pore size distribution that increases absorbency of the web later. Foam-forming also produces unique compression behavior in the thickness direction due to the amount of bulk that can be incorporated into the formed web. For instance, the web can have a long initial rise in compression load and high strain recovery after compression due to fiber reorientation during compression. Another benefit to using foam-forming as opposed to a wet laid process is the ability of the foam-forming process to displace liquid water from a porous medium. In this manner, the multi-layered web may have enhanced dewatering by the use of agents that lower the surface tension of the saturating liquid.

Yet another advantage to using a foam-forming process is the ability to orient the fibers in a layer when producing the multi-layered web. Foam-forming not only allows for the fibers to be oriented but also allows a different fiber orientation depending upon the different layers contained in the resulting web. For example only, in one aspect, the first layer 102 can include fibers oriented in a first direction, while the fibers contained in the second layer 104 can be oriented in a second direction. The first direction can be different or skew to the second direction. For instance, in one aspect, the first direction can be perpendicular to the second direction. In one aspect, the fibers in the first layer 102 can be oriented in the machine direction, while the fibers contained in the second layer 104 can be oriented in the cross machine direction or vice versus.

Fiber orientation can be determined by comparing within a particular layer the orientation of the fibers in one direction in comparison to the orientation of the fibers in a perpendicular direction. For instance, a layer that has more fibers oriented in the machine direction or the length direction can display a machine direction to cross machine direction ratio of greater than 1. Similarly, a layer that has more fibers oriented in the cross machine direction can display a machine direction to cross machine direction ratio of less than 1. In one aspect, greater than 50%, such as greater than 60% of the fibers in a layer can be oriented in a single direction.

Once the multi-layered web is formed, the web can be dried using any suitable process in order to further enhance the properties of the web. The web can be dried, for instance, by feeding the web through a dryer, placing the web adjacent to a heated dryer drum, or by forcing hot gases through the web. For instance, in one aspect, the web can be through-air dried.

In order to further increase the bulk of the multi-layer fibrous web and/or to further enhance the resilient properties of the web, the web can also be fed through various different downstream processes. For instance, in one aspect, the web can be subjected to a rush transfer process while the web is being made. For instance, the web can be transferred from a first fabric, such as a forming fabric, to a second fabric, such as a transfer fabric. In one aspect, the transfer fabric can be traveling at a slower speed than the forming fabric in order to impart increased stretch into the web. Rush transfer can also increase the void volume of the web.

Alternatively, rush transfer can occur from the transfer fabric to a dryer fabric, such as a throughdrying fabric. The throughdrying fabric can be traveling at a slower speed relative to the transfer fabric for causing rush transfer to occur.

In still another aspect, the multi-layer fibrous web can be placed against a three-dimensional fabric during formation in order to impart a design or pattern into the multi-layer fibrous web. For example, in one aspect, the multi-layered web can be placed on a throughdrying fabric containing impression knuckles which are raised at least about 0.005

inches above the plane of the fabric. During drying, the side of the multi-layer fibrous web facing the fabric can be macroscopically arranged to conform to the surface of the fabric to form a three-dimensional surface.

In still another aspect, the multi-layer fibrous web can be creped. For instance, in one aspect, the multi-layer fibrous web can be adhered to a creping surface, such as a Yankee dryer using an adhesive. An adhesive, for instance, can be sprayed onto the surface of the dryer for adhering the web to the surface of the dryer. The web then rotates into contact with a creping doctor blade which crepes the web from the surface of the drum. In one aspect, only one side of the multi-layer fibrous web is creped. In an alternative aspect, however, both sides of the multi-layer fibrous web can each be creped as described above.

In an alternative creping process, an adhesive may be applied to the surface of the multi-layer fibrous web instead of the surface of the dryer. In this aspect, for instance, an adhesive can be applied to one side of the multi-layer fibrous web according to a pattern. The multi-layer fibrous web is then adhered to the creping surface and creped from the surface.

Creping the multi-layer fibrous web may further improve the resilient properties of the web. Creping the multi-layer fibrous web, for instance, can further impart tension into the multi-layer fibrous web between the first layer that is creped and the second layer. This tension differential may further improve the resilient properties of the second layer when the multi-layer fibrous web is compressed and then released.

The multi-layer fibrous web made in accordance with the present disclosure is formed with an excellent balance of properties. The first layer 102 of the multi-layer fibrous web, for instance, can be formed from pulp fibers and therefore can provide the web with the feel of a conventional tissue product, such as a bath tissue, a facial tissue, a paper towel, an industrial wiper, or the like. The fibers used to form the first layer are also water absorbent and readily wick away moisture from an adjacent surface, such as one's hands. The multi-layer fibrous web of the present disclosure also has a second layer 104 with improved liquid capacity, allowing greater volume pick-up, as well as improved pick-up rate at high saturation properties, as the crossover zone 106 allows a liquid picked-up by the first layer to be rapidly transferred to the second layer 104. Particularly, the second layer, for instance, provides significant void volume for absorption of water, while also being resilient to compressive forces. When the multi-layer fibrous web is compressed and then the tension is released, the resilient second layer may also return to its original form and structure providing an enhanced wiping experience.

The resiliency of the second layer can be measured using various different tests. For example, in one aspect, the resiliency of the multi-layer fibrous web can be measured through bulk recovery. The sheet "bulk" is calculated as the quotient of the caliper of a dry tissue sheet, expressed in microns, divided by the dry basis weight, expressed in grams per square meter. The resulting sheet bulk is expressed in cubic centimeters per gram. More specifically, the caliper is measured as the total thickness of a stack of ten representative sheets and dividing the total thickness of the stack by ten, where each sheet within the stack is placed with the same side up. Caliper is measured in accordance with TAPPI test method T411 om-89 "Thickness (caliper) of Paper, Paperboard, and Combined Board" with Note 3 for stacked sheets. The micrometer used for carrying out T411 om-89 is an Emveco 200-A Tissue Caliper Tester available from Emveco, Inc., Newberg, Oreg. The micrometer has a load of 2.00 kilo-Pascals (132 grams per square inch), a pressure foot area of 2500 square millimeters, a pressure foot diameter of 56.42 millimeters, a dwell time of 3 seconds and a lowering rate of 0.8 millimeters per second.

In order to measure bulk recovery, an increased compressive force can be placed against the stack of sheets and the bulk can be measured while the compressive force is being placed on the sheets and after the compressive force has been removed. For example, the test above for calculating bulk can be used in which the 2.0 kPa load can be increased to 13 kPa. The caliper of the stack can be measured while under the 13 kPa load. The load can then be reduced to 2 kPa and the caliper can be measured again to determine bulk and thickness recovery. This test can be repeated three times and an average can be used as the final result.

When the compressive force is removed, for instance, multi-layer fibrous webs made according to the present disclosure will increase in bulk by at least about 5%, such as at least about 10%, such as at least about 15%, such as at least about 20%, such as at least about 25%, such as at least about 30%. The bulk, for instance, will increase in an amount up to about 90%, such as in an amount up to about 80%, such as in an amount up to about 70%.

During the above test, the caliper or thickness of the web can also be measured while the webs are compressed and after the compressive force has been removed. After the compressive force is removed, for instance, the web can increase in thickness by at least about 5%, such as at least about 8%, such as at least about 10% and generally in an amount less than about 90%, such as less than about 80%, such as less than about 50%.

As described above, the multi-layer fibrous web of the present disclosure can be used in numerous applications. In one aspect, for instance, the multi-layer fibrous web can be cut into individual sheets and packaged. For example, in one aspect, the individual sheets can be interfolded for being dispensed one at a time. The multi-layer fibrous web of the present disclosure may also be formed into a spirally wound product, or alternatively, may be used in any absorbent article, including wiping products and/or personal care articles as defined above.

Furthermore, certain aspects of the present disclosure may be better understood according to the following examples, which are intended to be non-limiting and exemplary in nature.

*Examples:*

*Test Parameters:* absorbent capacity and absorbent rate were measured as discussed above using a Gravimetric Absorbency Testing System (GATS) according to the M/K system GATS test using Analysis Program Version 4.3.4, a standard example apparatus, as would be known in the art, of which is shown in Fig. 7. As shown in Fig. 7, the absorbent rate and absorbent capacity of the following examples were absorbed from the bottom, to illustrate demand absorbency, or the ability to pull fluid in at zero head pressure.

All samples utilized an air content of about 60%.

Materials:

In the Examples, the following materials were used for all examples.

Pulp Fibers: Alabama River southern softwood kraft from Georgia Pacific.

Bicomponent Fibers: 6 mm, 2.2 grams per 10 km (dtex), PE/PET sheath/core, T255 from Trevira.

Eccentric Bicomponent Fibers: 6 mm, 6.7 dtex, PE/PET eccentric sheath/core, T255 from Trevira.

High crimp Polyester Fibers: 6 mm, 6 denier per filament (dpf), PET mono-fiber from Barnett

Sample 1:

The bottom layer (first layer) was formed from a suspension of 70 wt.% pulp fibers and 30% bicomponent fibers. The fibers of the bottom layer were placed on the forming fabric at a jet speed to wire speed ratio of 1.

The top layer (second layer) was formed from a suspension of 50 wt.% high crimp polyester fibers and 50 wt.% bicomponent fibers. The fibers of the top layer were placed on the forming fabric at a jet speed to wire speed of 1.

Sample 2:

The bottom layer (first layer) was formed from a suspension of 70 wt.% pulp fibers and 30 wt.% bicomponent fibers. The fibers of the bottom layer were placed on the forming fabric at a jet speed to wire speed ratio of 1.

The top layer (second layer) was formed from a suspension of 50 wt.% high crimp polyester fibers and 50 wt. % bicomponent fibers. The fibers of the top layer were placed on the forming fabric at a jet speed to wire speed ratio of 2

Sample 3:

The bottom layer (first layer) was formed from a suspension of 70 wt.% pulp fibers and 30% wt. % bicomponent fibers. The fibers of the bottom layer were placed on the forming fabric at a jet speed to wire speed ratio of 1.

The top layer (second layer) was formed from a suspension of 50 wt.% high crimp polyester fibers and 50 wt.% eccentric bicomponent fibers. The fibers of the top layer were placed on the forming wire at a jet speed to wire speed of 2.

For all samples, the bottom layer (first layer) was produced first. After formation of the bottom layer, the bottom suspension was turned off, and the top layer (second layer) suspension was turned on to form the second layer. After formation of the top layer, the bottom layer suspension was turned back on while the top layer suspension was also left on, to form a multi-layer fibrous web with both layers simultaneously. During this step, the lamella was oriented in the retracted position as discussed above. After formation of the multi-layer fibrous web with the lamella in the retracted position, the lamella was pushed in to prepare a two-layer sheet with layer separation.

After formation, the basis weight, density, gram of fluid per gram of product absorbent capacity absorbency from the bottom of the product (demand absorbency with zero head pressure) as measured using a Gravimetric Absorbency Testing System (GATS) as described above, and absorbent rate (as measured using a Gravimetric Absorbency Testing System (GATS) as described above, were recorded for the bottom layer (Bot), top layer (Top), bottom layer plus top layer (A&B, formed separately), lamella in (In), and lamella out (Out), the results of which are shown in Figs. 3-6. For instance, as shown, the samples formed with the lamella out exhibited greater than additive results in both absorbent rate and absorbent capacity.

These and other modifications and variations to the present invention may be practiced by those of ordinary skill in the art, without departing from the scope of the present invention, which is set forth in the appended claims. In addition, it should be understood that aspects of the various aspects may be interchanged both in whole or in part. Furthermore, those of ordinary skill in the art will appreciate that the foregoing description is by way of example only, and is not intended to limit the invention so further described in such appended claims.

## Claims

1. A multi-layer fibrous web (100) comprising:

   a first layer (102);
   a second layer (104) having a capillary pressure that is less than a capillary pressure of the first layer (102); and
   a crossover zone (106) at an interface of the first layer (102) and the second layer (104), where a capillary pressure of the crossover zone (106) is between the capillary pressure of the first layer (102) and the capillary pressure of the second layer (104),
   wherein both the first layer (102) and the second layer (104) are a foam formed layer,
   wherein the crossover zone (106) comprises about 5 wt.% to about 50 wt.% of the multi-layer fibrous web (100),
   wherein the first foam formed layer (102) comprises pulp fibers, and
   wherein the second foam formed layer (104) comprises elastomeric polymer fibers.

2. The multi-layer fibrous web (100) as defined in claim 1, wherein the crossover zone (106) includes first foam formed layer fibers and second foam formed layer fibers.

3. The multi-layer fibrous web (100) as defined in claim 1 or 2, wherein the multi-layer fibrous web exhibits an absorbent capacity as measured using a Gravimetric Absorbency Testing System (GATS) according to the M/K system GATS test using Analysis Program Version 4.3.4, of about 5.5 grams of fluid per gram of wipe (g/g) or greater.

4. The multi-layer fibrous web (100) as defined in any one of claims 1-3, wherein the multi-layer fibrous web exhibits an absorbent rate as measured using a Gravimetric Absorbency Testing System (GATS) according to the M/K system GATS test using Analysis Program Version 4.3.4, of about 1.6 ((g/g)*sec$^{0.5}$) or greater.

5. The multi-layer fibrous web (100) as defined in any one of claims 1-4, wherein the second foam formed layer (104) comprises at least about 10% by dry weight of the multi-layer fibrous web (100).

6. The multi-layer fibrous web (100) as defined in any one of claims 1-5, wherein the first foam formed layer (102) has a capillary pressure at 0% saturation of greater than 33 kilopascals, measured according to the method as described herein.

7. The multi-layer fibrous web (100) as defined in any one of claims 1-6, wherein the second foam formed layer (104) has a capillary pressure at 0% saturation of less than 33 kilopascals, measured according to the method as described herein.

8. A wiping product comprising the multi-layer fibrous web (100) as defined in any one of claims 1-7.

9. An absorbent article comprising the multi-layer fibrous web (100) as defined in any one of claims 1-7.

10. A method of forming a multi-layer fibrous web (100), comprising;

    forming a first foam formed layer (102); and
    forming a second foam formed layer (104) having a capillary pressure that is less than a capillary pressure of the first foam formed layer (102),
    wherein the first foam formed layer (102) and second foam formed layer (104) are formed using a headbox (200);
    wherein the headbox (200) comprises at least one lamella (208), and
    wherein the at least one lamella (208) is at least partially retracted from the headbox (200).

11. The method of claim 10, wherein the lamella (208) is retracted to a position sufficient to allow mixing of a portion of first foam formed layer fibers and a portion of second foam formed layer fibers in the headbox (200), forming the first foam formed layer (102), the second foam formed layer (104), and a crossover zone (106).

12. The method of claim 10 or 11, wherein the first foam formed layer fibers and the second foam formed layer fibers are provided to a single headbox (200) as a suspension of first foam formed layer fibers and a suspension of second foam formed layer fibers.

13. The method of any of claims 10-12, wherein at least one of the first foam formed layer (102) and the second foam

formed layer (104) is formed using a ratio of jet speed to forming fabric speed of about 0.5:1 to about 5:1.

**14.** The method of any of claims 10-13, wherein the crossover zone (106) comprises first foam formed layer fibers and second foam formed layer fibers, and comprises about 5 wt.% to about 50 wt.% of the multi-layer fibrous web (100).

**15.** The method of any of claims 10-14, wherein the first foam formed layer (102) has a capillary pressure at 0% saturation of greater than 33 kilopascals, and/or the second foam formed layer (104) has a capillary pressure at 0% saturation of less than 33 kilopascals, measured according to the method as described herein.

## Patentansprüche

**1.** Mehrschichtige Faserbahn (100), umfassend:

eine erste Schicht (102);
eine zweite Schicht (104), die einen Kapillardruck aufweist, der geringer ist als ein Kapillardruck der ersten Schicht (102); und
eine Übergangszone (106) an einer Grenzfläche der ersten Schicht (102) und der zweiten Schicht (104), wobei ein Kapillardruck der Übergangszone (106) zwischen dem Kapillardruck der ersten Schicht (102) und dem Kapillardruck der zweiten Schicht (104) liegt,
wobei sowohl die erste Schicht (102) als auch die zweite Schicht (104) eine schaumgebildete Schicht sind,
wobei die Übergangszone (106) etwa 5 Gew.-% bis etwa 50 Gew.-% der mehrschichtigen Faserbahn (100) umfasst,
wobei die erste schaumgebildete Schicht (102) Zellstofffasern umfasst, und
wobei die zweite schaumgebildete Schicht (104) elastomere Polymerfasern umfasst.

**2.** Mehrschichtige Faserbahn (100) nach Anspruch 1, wobei die Übergangszone (106) erste schaumgebildete Schichtfasern und zweite schaumgebildete Schichtfasern einschließt.

**3.** Mehrschichtige Faserbahn (100) nach Anspruch 1 oder 2, wobei die mehrschichtige Faserbahn eine unter Verwendung eines Gravimetrischen Absorptionsprüfsystems (GATS) gemäß dem M/K-System-GATS-Test unter Verwendung des Analyseprogramms Version 4.3.4 gemessene Absorptionskapazität von etwa 5,5 Gramm Flüssigkeit pro Gramm Tuch (g/g) oder mehr aufweist.

**4.** Mehrschichtige Faserbahn (100) nach einem der Ansprüche 1 bis 3, wobei die mehrschichtige Faserbahn eine unter Verwendung eines Gravimetrischen Absorptionsprüfsystems (GATS) gemäß dem M/K-System-GATS-Test unter Verwendung des Analyseprogramms Version 4.3.4 gemessene Absorptionsrate von etwa 1,6 ((g/g)*$sec^{05}$) oder mehr aufweist.

**5.** Mehrschichtige Faserbahn (100) nach einem der Ansprüche 1 bis 4, wobei die zweite schaumgebildete Schicht (104) mindestens etwa 10 Trockengewichts-% der mehrschichtigen Faserbahn (100) umfasst.

**6.** Mehrschichtige Faserbahn (100) nach einem der Ansprüche 1 bis 5, wobei die erste schaumgebildete Schicht (102) einen Kapillardruck bei 0 % Sättigung von mehr als 33 Kilopascal aufweist, gemessen gemäß dem hierin beschriebenen Verfahren.

**7.** Mehrschichtige Faserbahn (100) nach einem der Ansprüche 1 bis 6, wobei die zweite schaumgebildete Schicht (104) einen Kapillardruck bei 0 % Sättigung von weniger als 33 Kilopascal aufweist, gemessen gemäß dem hierin beschriebenen Verfahren.

**8.** Wischprodukt, das die mehrschichtige Faserbahn (100) nach einem der Ansprüche 1 bis 7 umfasst.

**9.** Absorbierender Artikel, umfassend die mehrschichtige Faserbahn (100) nach einem der Ansprüche 1 bis 7.

**10.** Verfahren zum Bilden einer mehrschichtigen Faserbahn (100), umfassend;

Bilden einer ersten schaumgebildeten Schicht (102); und
Bilden einer zweiten schaumgebildeten Schicht (104), die einen Kapillardruck aufweist, der geringer ist als ein

Kapillardruck der ersten schaumgebildeten Schicht (102),
wobei die erste schaumgebildete Schicht (102) und die zweite schaumgebildete Schicht (104) unter Verwendung eines Stoffauflaufs (200) gebildet werden;
wobei der Stoffauflauf (200) mindestens eine Lamelle (208) umfasst, und
wobei die mindestens eine Lamelle (208) mindestens teilweise aus dem Stoffauflauf (200) zurückgezogen ist.

**11.** Verfahren nach Anspruch 10, wobei die Lamelle (208) in eine Position zurückgezogen wird, die ausreicht, um ein Vermischen eines Teils der ersten schaumgebildeten Schichtfasern und eines Teils der zweiten schaumgebildeten Schichtfasern in dem Stoffauflauf (200) zu ermöglichen, wodurch die erste schaumgebildete Schicht (102), die zweite schaumgebildete Schicht (104) und eine Übergangszone (106) gebildet werden.

**12.** Verfahren nach Anspruch 10 oder 11, wobei die ersten schaumgebildeten Schichtfasern und die zweiten schaumgebildeten Schichtfasern einem einzigen Stoffauflauf (200) als eine Suspension von ersten schaumgebildeten Schichtfasern und eine Suspension von zweiten schaumgebildeten Schichtfasern bereitgestellt werden.

**13.** Verfahren nach einem der Ansprüche 10 bis 12, wobei mindestens eine von der ersten schaumgebildeten Schicht (102) und der zweiten schaumgebildeten Schicht (104) unter Verwendung eines Verhältnisses von Düsengeschwindigkeit zu Formgewebe-Geschwindigkeit von etwa 0,5:1 bis etwa 5:1 gebildet wird.

**14.** Verfahren nach einem der Ansprüche 10 bis 13, wobei die Übergangszone (106) erste schaumgebildete Schichtfasern und zweite schaumgebildete Schichtfasern umfasst und etwa 5 Gew.-% bis etwa 50 Gew.-% der mehrschichtigen Faserbahn (100) umfasst.

**15.** Verfahren nach einem der Ansprüche 10 bis 14, wobei die erste schaumgebildete Schicht (102) einen Kapillardruck bei 0 % Sättigung von mehr als 33 Kilopascal aufweist, und/oder die zweite schaumgebildete Schicht (104) einen Kapillardruck bei 0 % Sättigung von weniger als 33 Kilopascal aufweist, gemessen gemäß dem hierin beschriebenen Verfahren.

## Revendications

**1.** Bande fibreuse multicouche (100) comprenant :

une première couche (102) ;
une seconde couche (104) ayant une pression capillaire qui est inférieure à une pression capillaire de la première couche (102) ; et
une zone de croisement (106) au niveau d'une interface de la première couche (102) et de la seconde couche (104), où une pression capillaire de la zone de croisement (106) est comprise entre la pression capillaire de la première couche (102) et la pression capillaire de la seconde couche (104),
dans laquelle la première couche (102) et la seconde couche (104) sont toutes deux une couche formée de mousse,
dans laquelle la zone de croisement (106) comprend entre environ 5 % en poids et environ 50 % en poids de la bande fibreuse multicouche (100),
dans laquelle la première couche formée de mousse (102) comprend des fibres de pâte de papier, et
dans laquelle la seconde couche formée de mousse (104) comprend des fibres polymères élastomères.

**2.** Bande fibreuse multicouche (100) selon la revendication 1, dans laquelle la zone de croisement (106) comporte des premières fibres de couche formées de mousse et des secondes fibres de couche formées de mousse.

**3.** Bande fibreuse multicouche (100) selon la revendication 1 ou 2, dans laquelle la bande fibreuse multicouche présente une capacité d'absorption mesurée à l'aide d'un système d'essai d'absorption gravimétrique (GATS) selon le test GATS de système M/K à l'aide de la version de programme d'analyse 4.3.4, d'environ 5,5 grammes de fluide par gramme de lingette (g/g) ou plus.

**4.** Bande fibreuse multicouche (100) selon l'une quelconque des revendications 1 à 3, dans laquelle la bande fibreuse multicouche présente un taux d'absorption mesuré à l'aide d'un système d'essai d'absorption gravimétrique (GATS) selon le test GATS de système M/K à l'aide de la version programme d'analyse 4.3.4, d'environ 1,6 ((g/g)*sec$^{05}$) ou plus.

**5.** Bande fibreuse multicouche (100) selon l'une quelconque des revendications 1 à 4, dans laquelle la seconde couche formée de mousse (104) comprend au moins environ 10 % en poids sec de la bande fibreuse multicouche (100).

**6.** Bande fibreuse multicouche (100) selon l'une quelconque des revendications 1 à 5, dans laquelle la première couche formée de mousse (102) a une pression capillaire à 0 % de saturation supérieure à 33 kilopascals, mesurée selon le procédé tel que décrit dans la description.

**7.** Bande fibreuse multicouche (100) selon l'une quelconque des revendications 1 à 6, dans laquelle la seconde couche formée de mousse (104) a une pression capillaire à 0 % de saturation inférieure à 33 kilopascals, mesurée selon le procédé tel que décrit dans la description.

**8.** Produit d'essuyage comprenant la bande fibreuse multicouche (100) selon l'une quelconque des revendications 1 à 7.

**9.** Article absorbant comprenant la bande fibreuse multicouche (100) selon l'une quelconque des revendications 1 à 7.

**10.** Procédé de formation d'une bande fibreuse multicouche (100), comprenant ;

la formation d'une première couche formée de mousse (102) ; et
la formation d'une seconde couche formée de mousse (104) ayant une pression capillaire qui est inférieure à une pression capillaire de la première couche formée de mousse (102),
dans lequel la première couche formée de mousse (102) et la seconde couche formée de mousse (104) sont formées à l'aide d'une caisse de tête (200) ;
dans lequel la caisse de tête (200) comprend au moins une lamelle (208), et
dans lequel l'au moins une lamelle (208) est au moins partiellement rétractée de la caisse de tête (200).

**11.** Procédé selon la revendication 10, dans lequel la lamelle (208) est rétractée dans une position suffisante pour permettre le mélange d'une partie des fibres de la première couche formée de mousse et d'une partie des fibres de la seconde couche formée de mousse dans la caisse de tête (200), le formage de la première couche formée de mousse (102), la seconde couche formée de mousse (104) et une zone de croisement (106).

**12.** Procédé selon la revendication 10 ou 11, dans lequel les fibres de la première couche formée de mousse et les fibres de la seconde couche formée de mousse sont fournies à une seule caisse de tête (200) comme suspension de fibres de la première couche formée de mousse et une suspension de fibres de la seconde couche formée de mousse.

**13.** Procédé selon l'une quelconque des revendications 10 à 12, dans lequel au moins l'une parmi la première couche formée de mousse (102) et la seconde couche formée de mousse (104) est formée à l'aide d'un rapport entre la vitesse de jet et la vitesse de tissu de formage d'environ 0,5:1 à environ 5:1.

**14.** Procédé selon l'une quelconque des revendications 10 à 13, dans lequel la zone de croisement (106) comprend des fibres de la première couche formée de mousse et des fibres de la seconde couche formée de mousse, et comprend entre environ 5 % en poids et environ 50 % en poids de la bande fibreuse multicouche (100).

**15.** Procédé selon l'une quelconque des revendications 10 à 14, dans lequel la première couche formée de mousse (102) a une pression capillaire à 0 % de saturation supérieure à 33 kilopascals, et/ou la seconde couche formée de mousse (104) a une pression capillaire à 0 % de saturation inférieure à 33 kilopascals, mesurée selon le procédé tel que décrit dans la description.

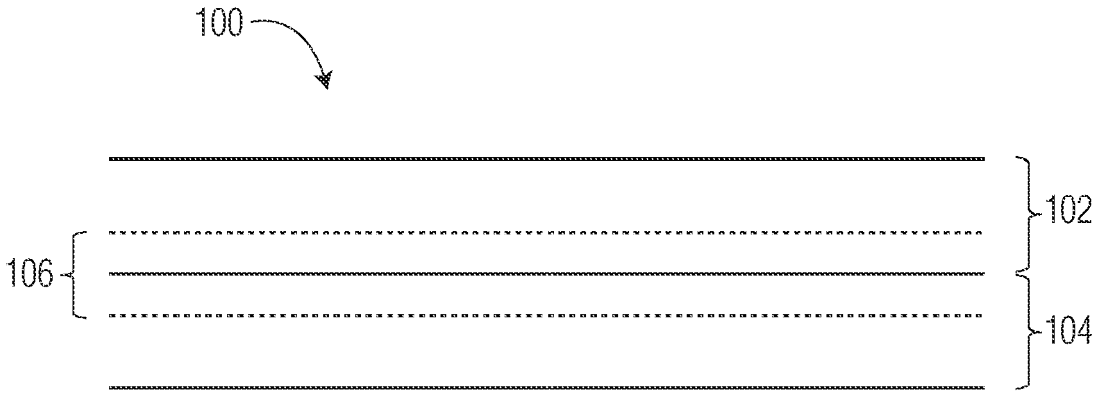


FIG. 1

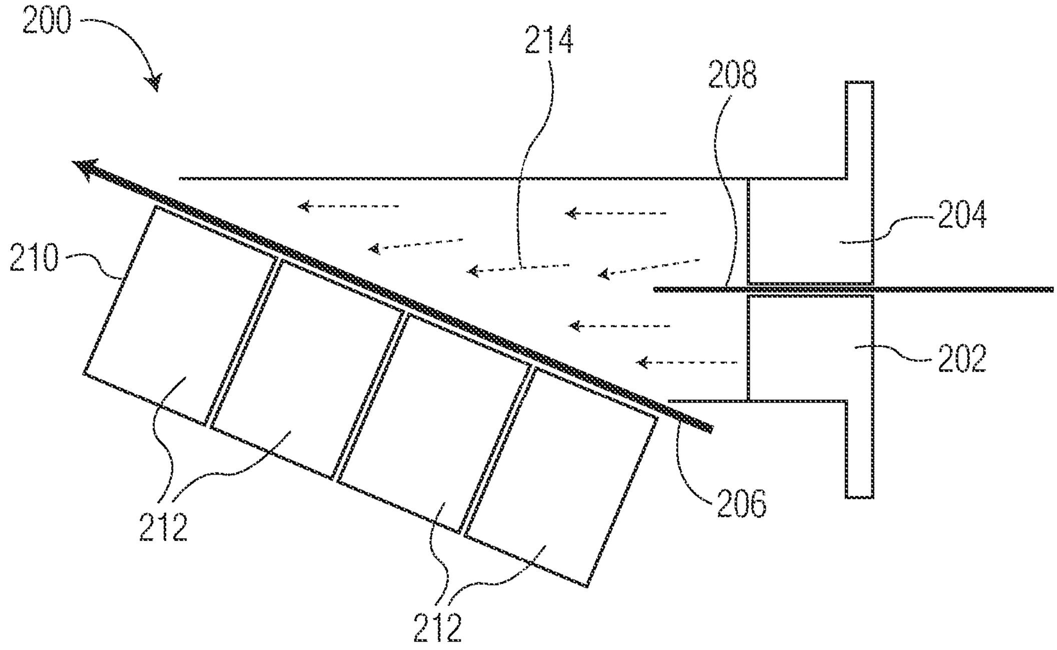
200
214
208
204
210
202
212
206
212

FIG. 2A

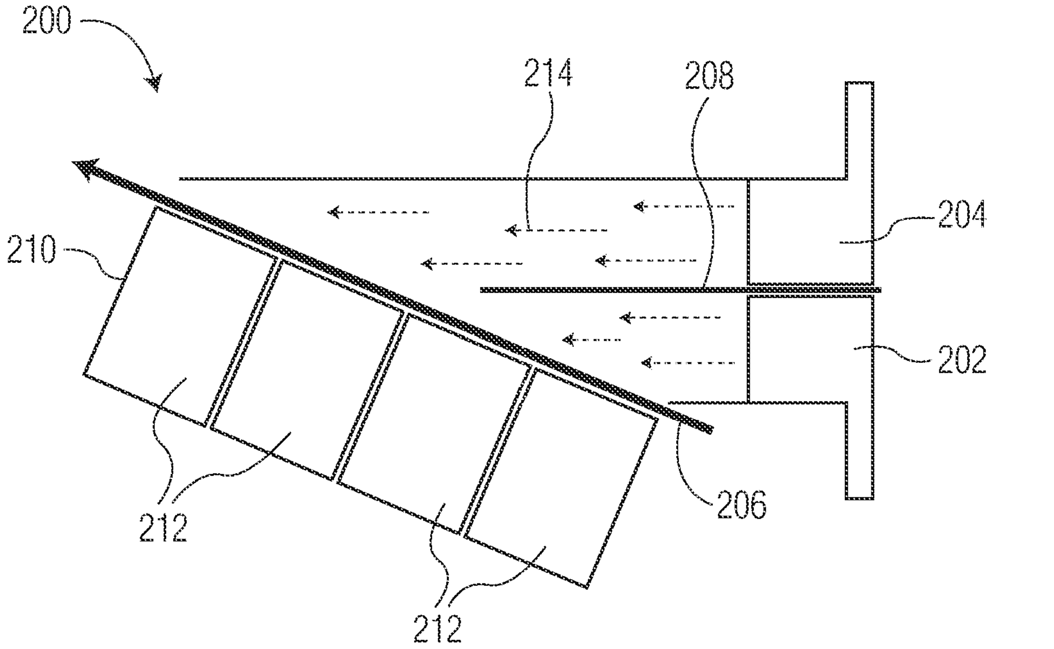
200
214
208
204
210
202
212
206
212

FIG. 2B

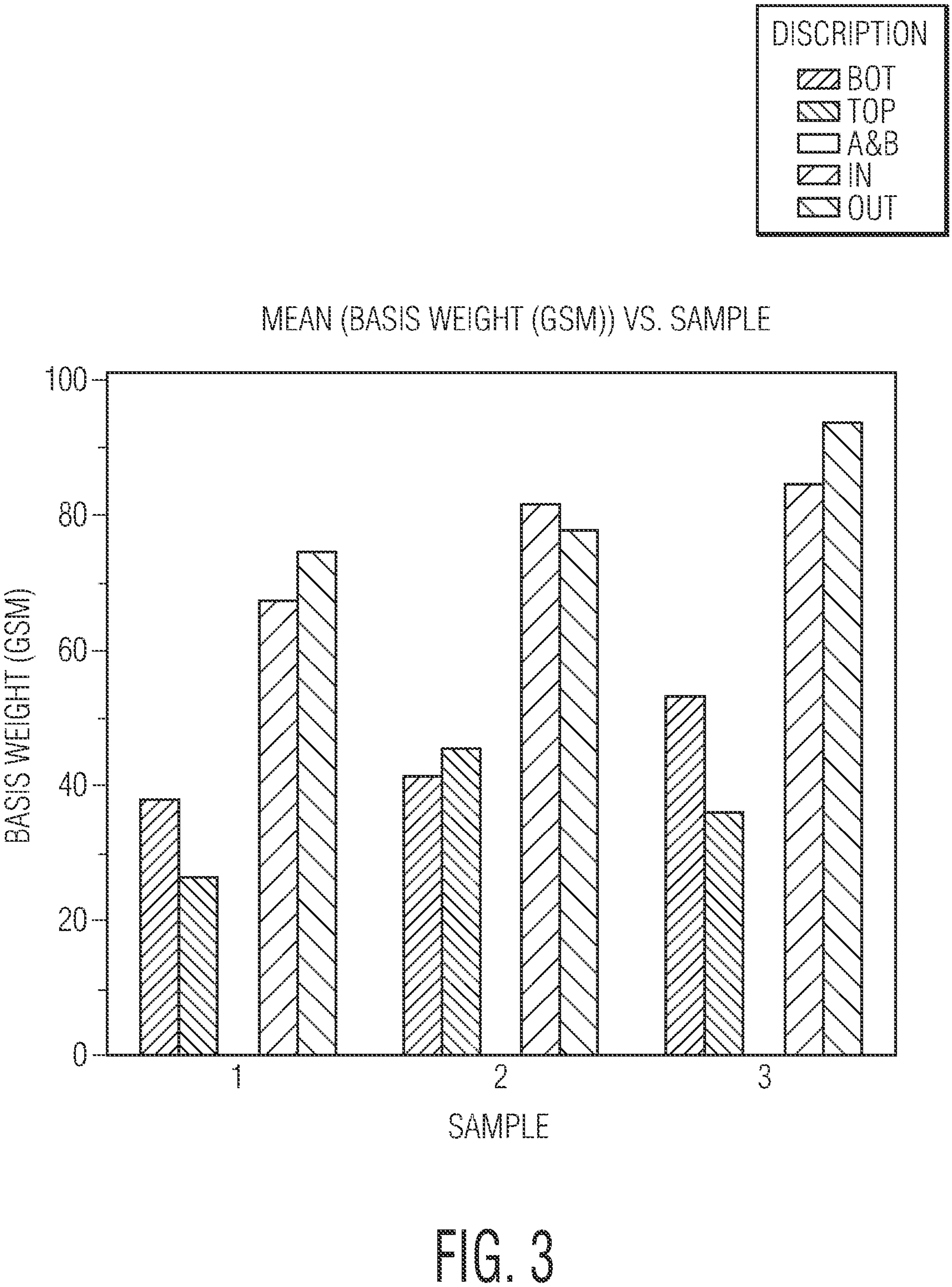
DISCRIPTION
BOT
TOP
A&B
IN
OUT
MEAN (BASIS WEIGHT (GSM)) VS. SAMPLE
100
80
60
40
20
0
BASIS WEIGHT (GSM)
1
2
3
SAMPLE

FIG. 3

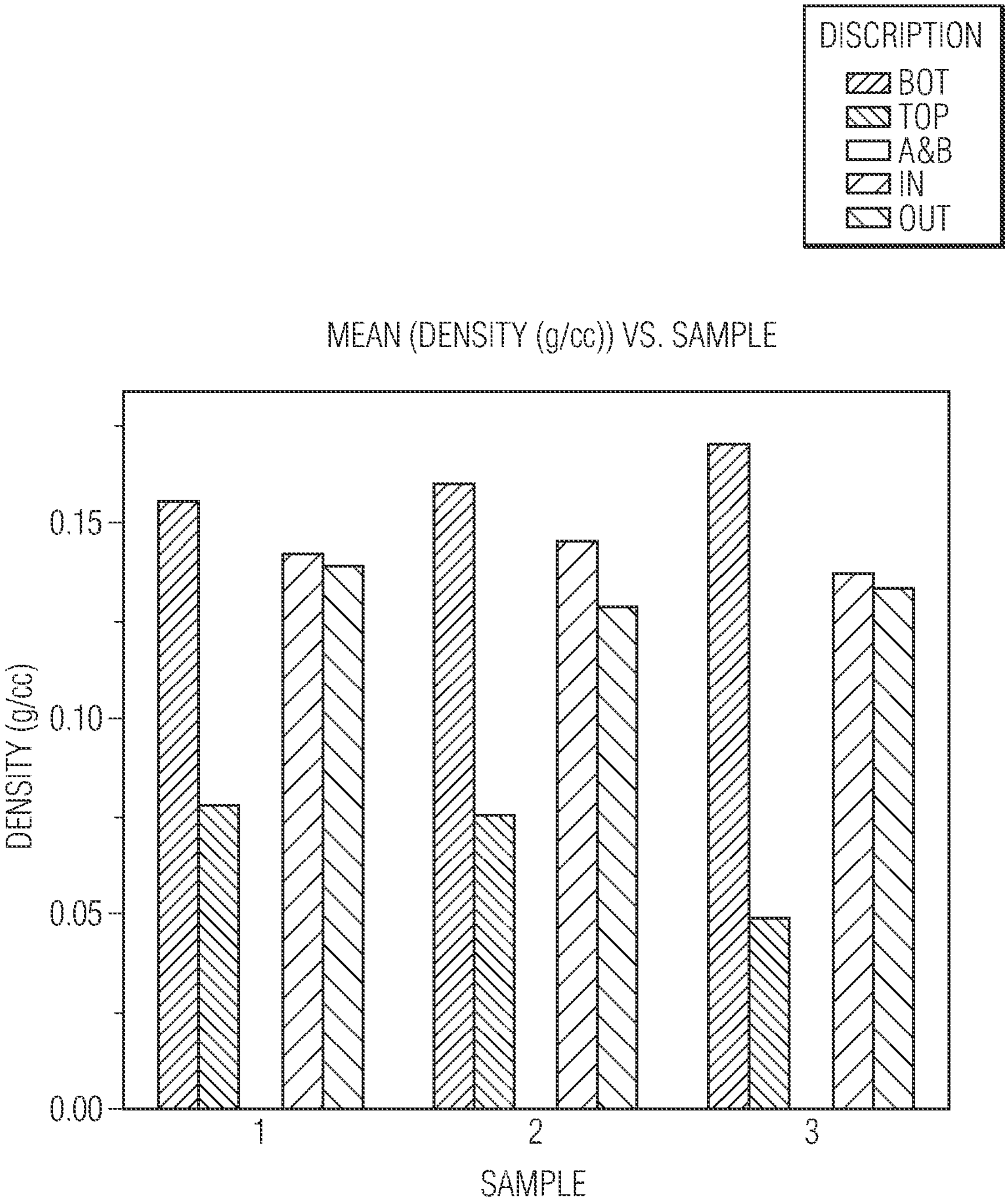
DISCRIPTION
BOT
TOP
A&B
IN
OUT
MEAN (DENSITY (g/cc)) VS. SAMPLE
DENSITY (g/cc)
0.00
0.05
0.10
0.15
1
2
3
SAMPLE

FIG. 4

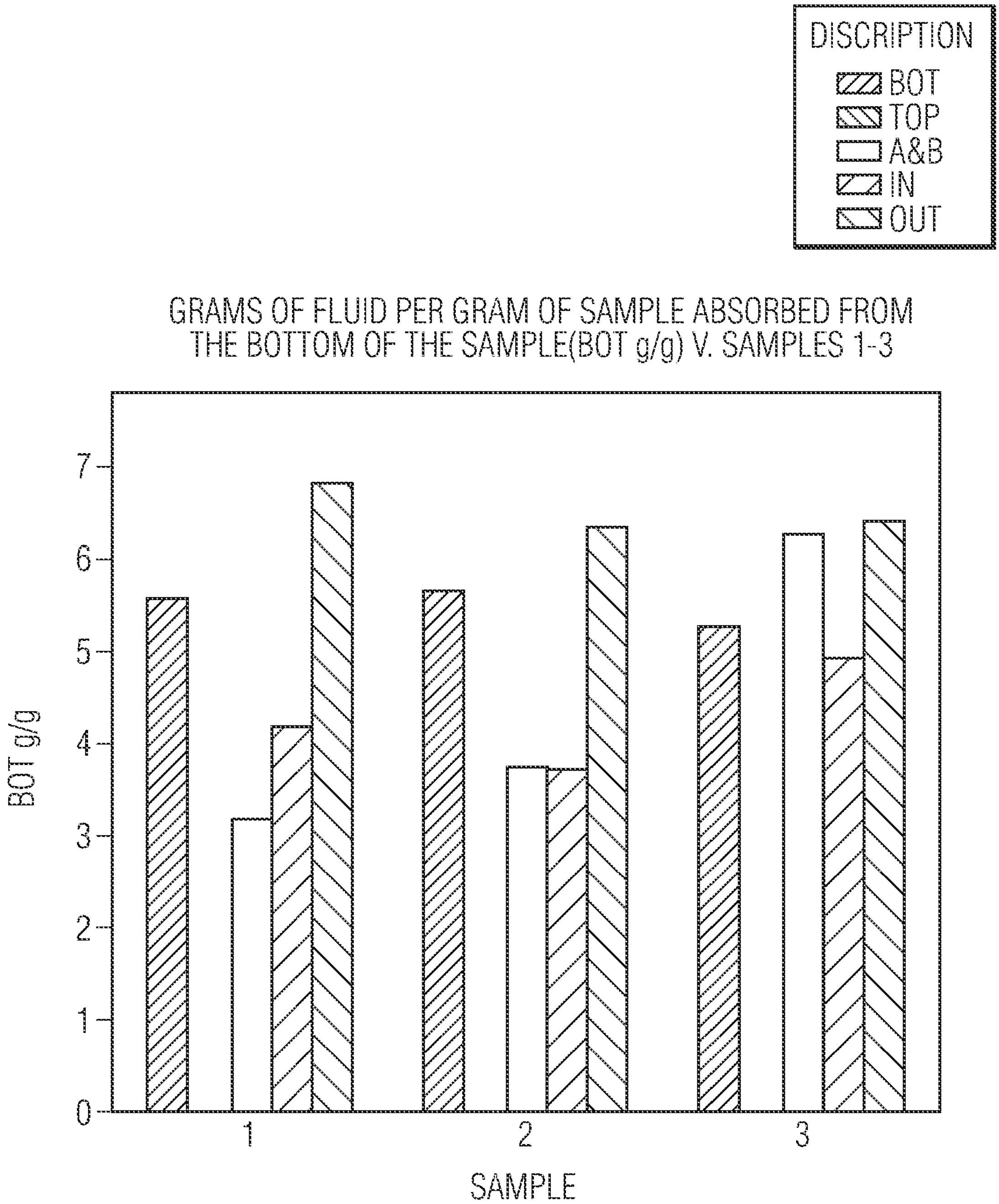
DISCRIPTION
BOT
TOP
A&B
IN
OUT
GRAMS OF FLUID PER GRAM OF SAMPLE ABSORBED FROM
THE BOTTOM OF THE SAMPLE(BOT g/g) V. SAMPLES 1-3
7
6
5
4
3
2
1
0
BOT g/g
1
2
3
SAMPLE

FIG. 5

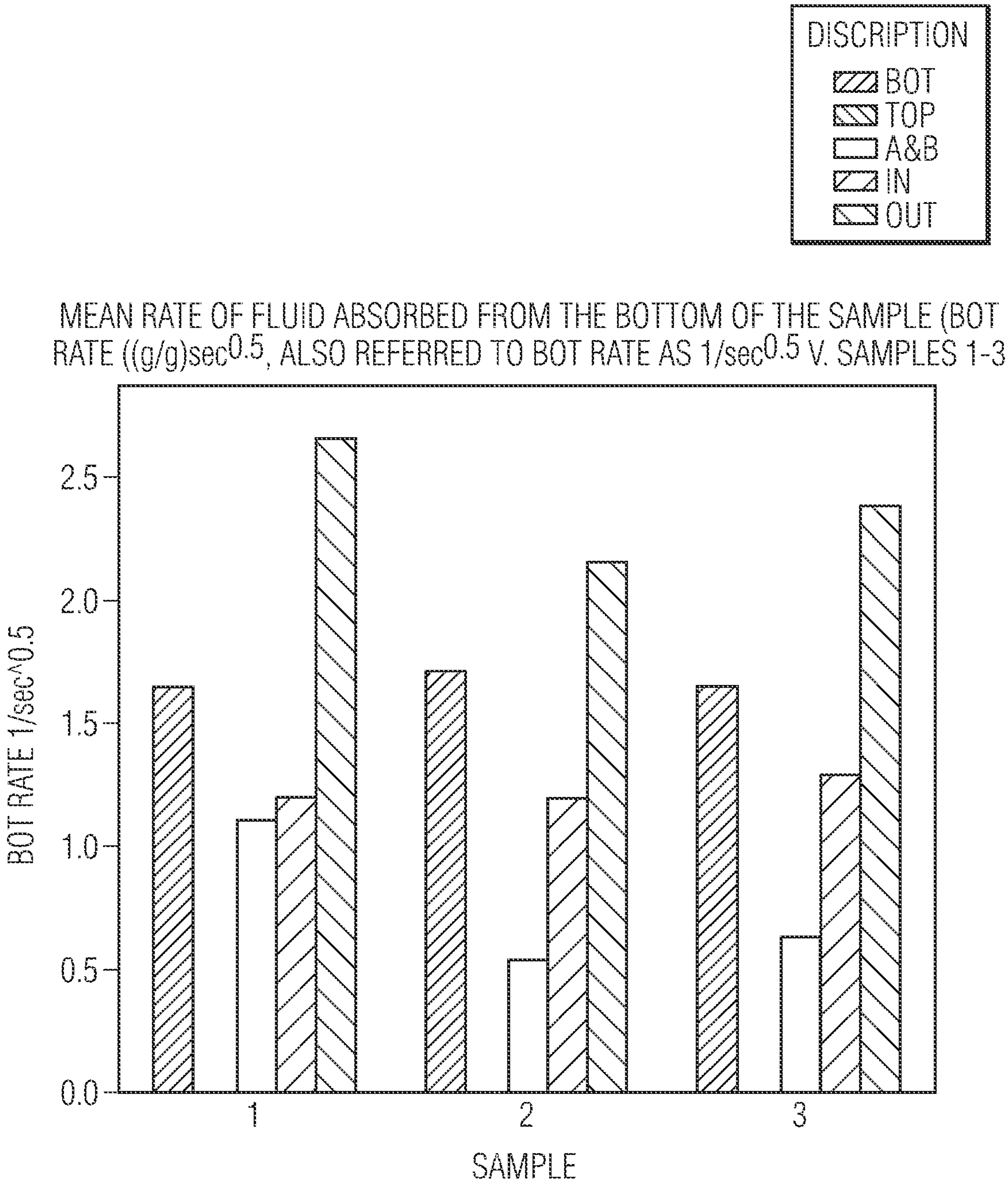
DISCRIPTION
BOT
TOP
A&B
IN
OUT
MEAN RATE OF FLUID ABSORBED FROM THE BOTTOM OF THE SAMPLE (BOT RATE ((g/g)sec$^{0.5}$, ALSO REFERRED TO BOT RATE AS 1/sec$^{0.5}$ V. SAMPLES 1-3
BOT RATE 1/sec^0.5
0.0
0.5
1.0
1.5
2.0
2.5
1
2
3
SAMPLE

FIG. 6

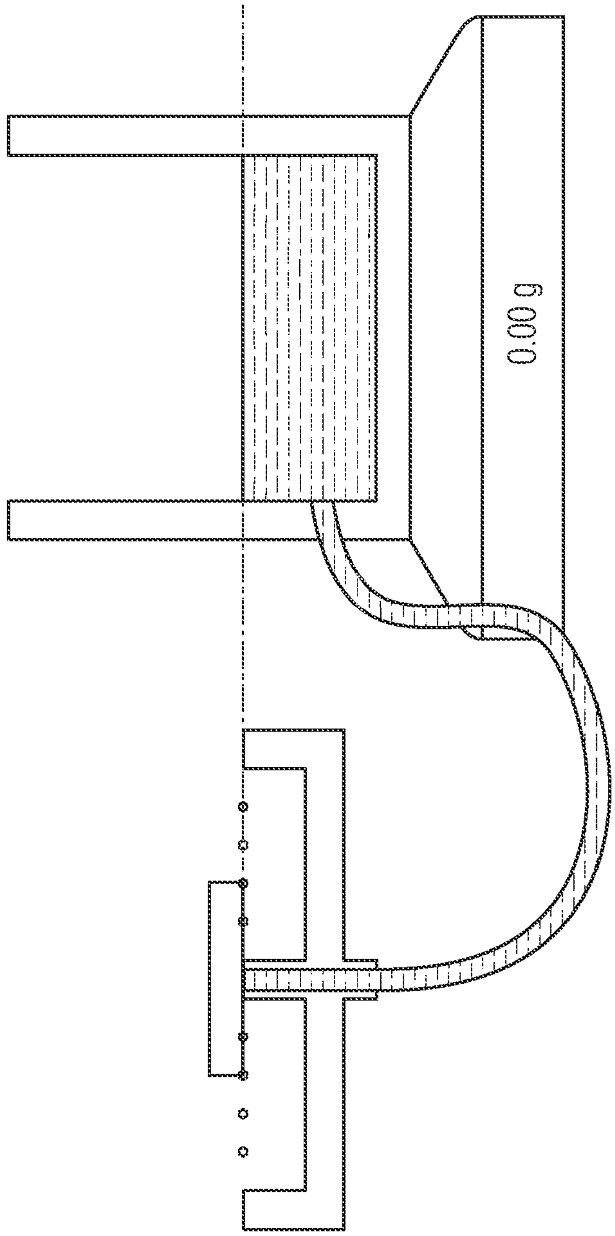


FIG. 7

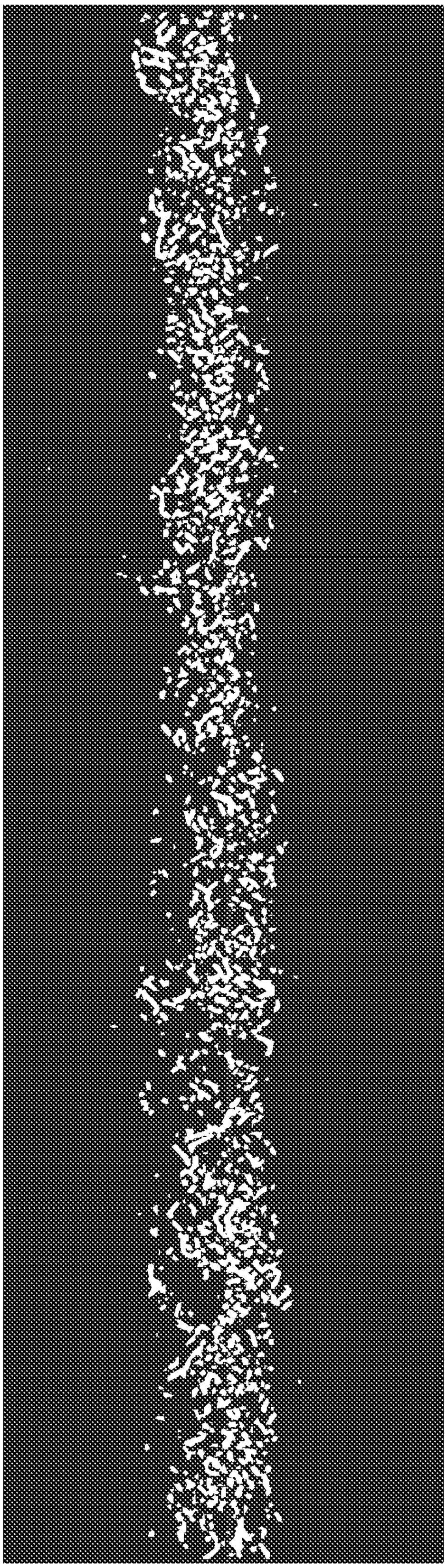

FIG. 8A

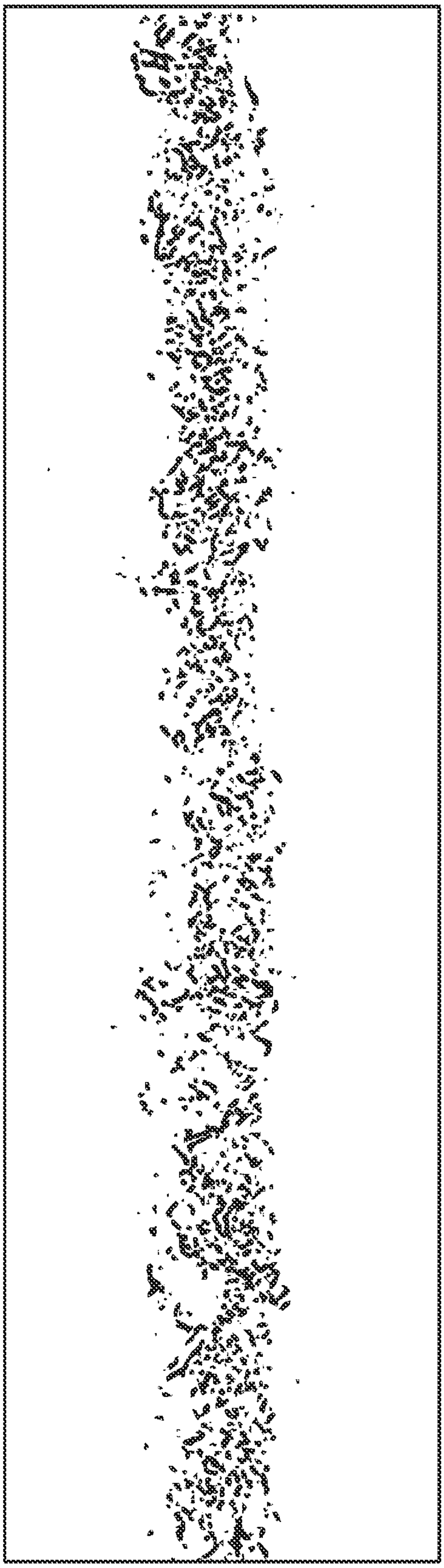

FIG. 8B

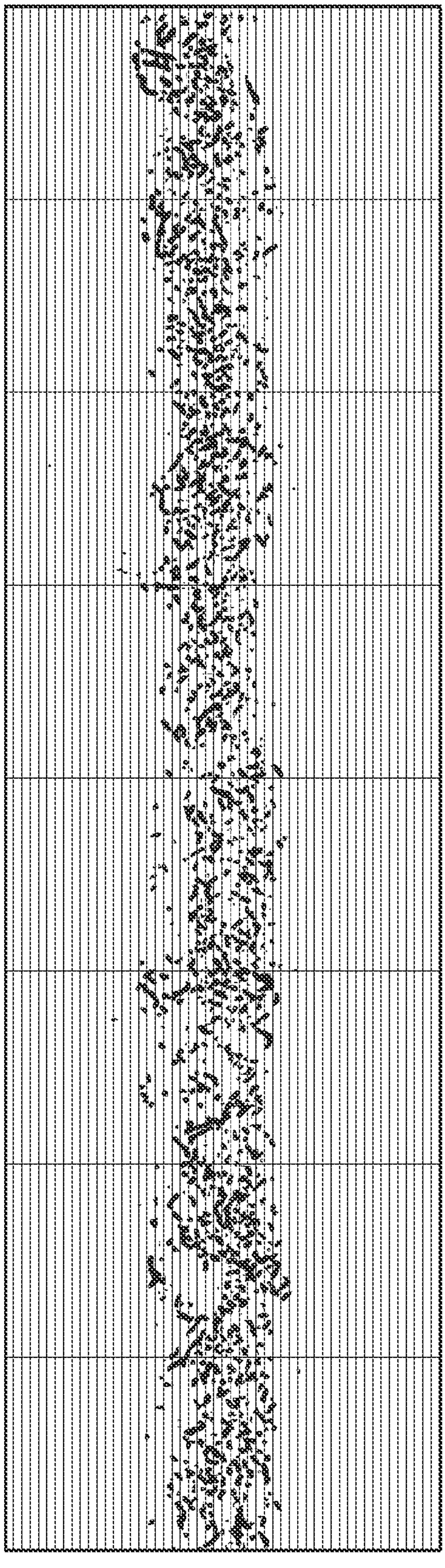

FIG. 8C

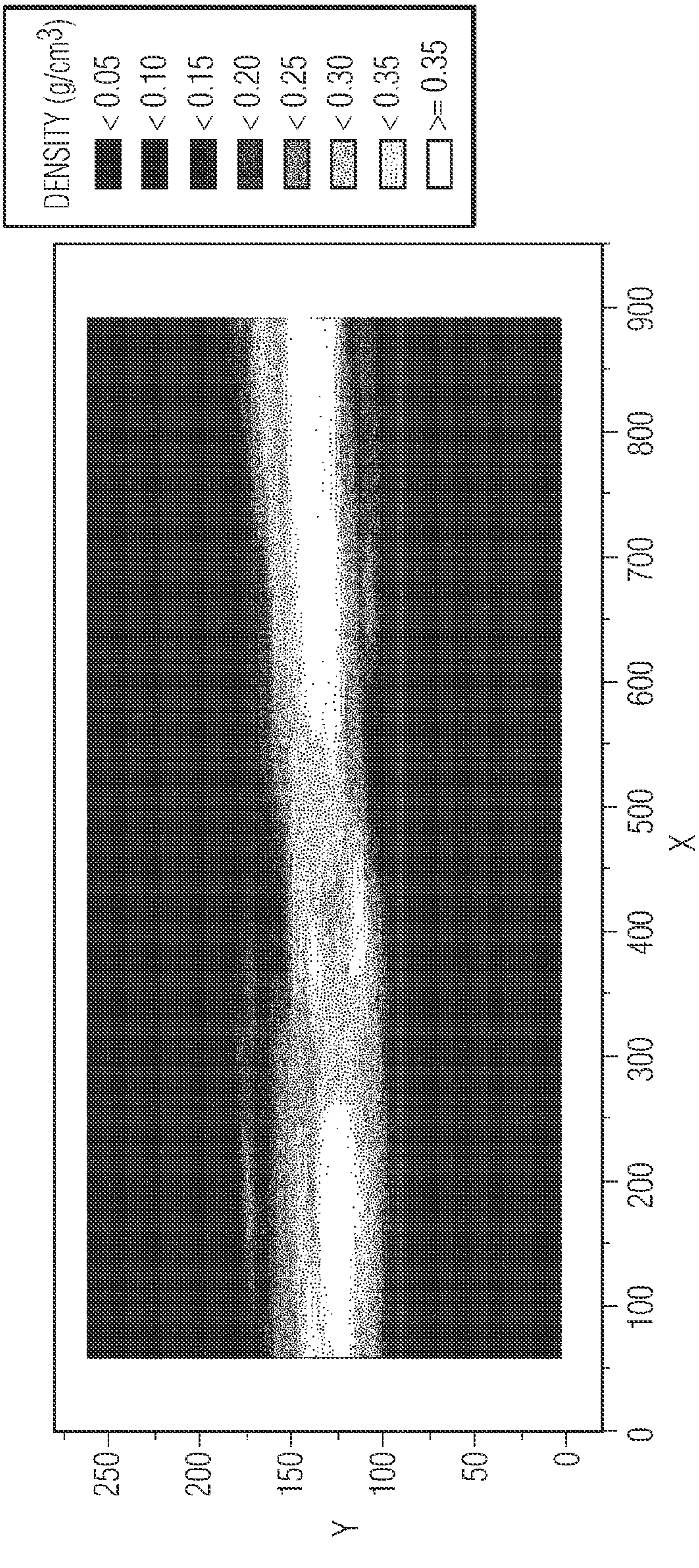
DENSITY (g/cm3)
< 0.05
< 0.10
< 0.15
< 0.20
< 0.25
< 0.30
< 0.35
>= 0.35
Y
250
200
150
100
50
0
X
0
100
200
300
400
500
600
700
800
900

FIG. 8D

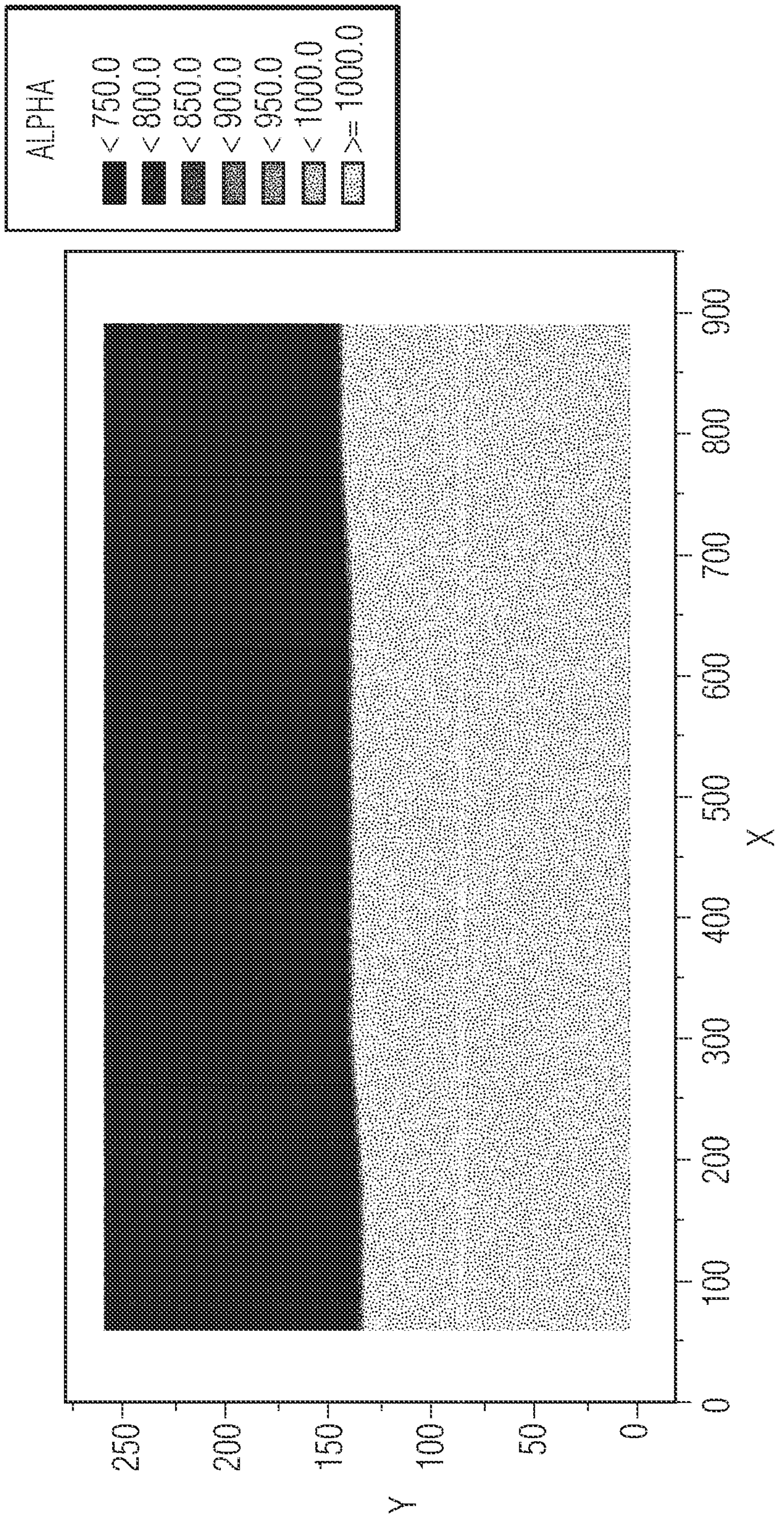
ALPHA
< 750.0
< 800.0
< 850.0
< 900.0
< 950.0
< 1000.0
>= 1000.0
Y
0
50
100
150
200
250
X
0
100
200
300
400
500
600
700
800
900

FIG. 8E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0496524 A1
- US 6152904 A, Matthews
- US 5529665 A, Kaun


### Non-patent literature cited in the description


- Textile Science and Technology. Pronoy K. Chatterjee. 1985, vol. 7
- *Encyclopedia of Polymer Science and Engineering*, 1985, vol. 3, 299-300